# EUROPEAN PATENT SPECIFICATION

(11) **EP 2 183 910 B1**
(45) Date of publication and mention of the grant of the patent: **25.08.2021**
(21) Application number: 08782542.8
(22) Date of filing: 30.07.2008
(51) Int. Cl.: F16M 11/04, F16M 13/04, F16M 13/02, G03B 17/56, H04N 5/228, H04N 5/225

(54) **COMPONENTS OF A PORTABLE DIGITAL VIDEO CAMERA**
KOMPONENTEN EINER TRAGBAREN DIGITALVIDEOKAMERA
COMPOSANTS D'UNE CAMÉRA VIDÉO NUMÉRIQUE PORTABLE

(30) Priority: 30.07.2007 US 952810 P; 30.07.2008 US 322219
(43) Date of publication of application: 12.05.2010
(73) Proprietor: Contour IP Holding, LLC, Provo, UT 84604 (US)
(72) Inventor: GREEN, Jason, Seattle, Washington 98125 (US); BARROS, Marc, Bellevue, Washington 98005 (US); THORPE, David, Portland, Oregon 97210 (US); KIM, Chunshik, Portland, Oregon 97225 (US); BALLERSTEDT, Felix, Portland, Oregon 97215 (US); KNAUB, David, Randall, Portland, Oregon 97239 (US); VALADEZ, Oved, Portland, Oregon 97214 (US); KETTENRING, Peter, 64354 Reinheim (DE); NOVOTNY, Margeigh, San Francisco, California 94105-3459 (US); O'DONNELL, Laura, El Segundo, California 90245 (US); HOWARD, Jeff, San Francisco, California 94105-3459 (US)
(74) Representative: Hanna Moore + Curley
(86) International application number: PCT/US2008/071661
(87) International publication number: WO 2009/018391

(56) References cited:
- EP-A1- 0 980 181
- EP-A1- 1 160 499
- WO-A1-99/07138
- GB-A- 2 403 366
- US-A- 4 525 045
- US-A- 5 218 439
- US-A- 5 557 329
- US-A- 6 028 627
- US-A- 6 091 831
- US-A1- 2002 067 920
- US-A1- 2004 004 825
- US-A1- 2004 114 919
- US-A1- 2006 274 171
- US-A1- 2007 111 754
- US-B1- 6 377 302
- US-B1- 6 663 064

## Description

### Related Application

This application claims benefit of U.S. Provisional Patent Application No. 60/952,810, filed July 30, 2007.

### Technical Field

The field of invention relates to point-of-view (POV) video cameras or camcorders and, in particular, to an integrated hands-free, POV action sports video camera or camcorder.

### Background Information

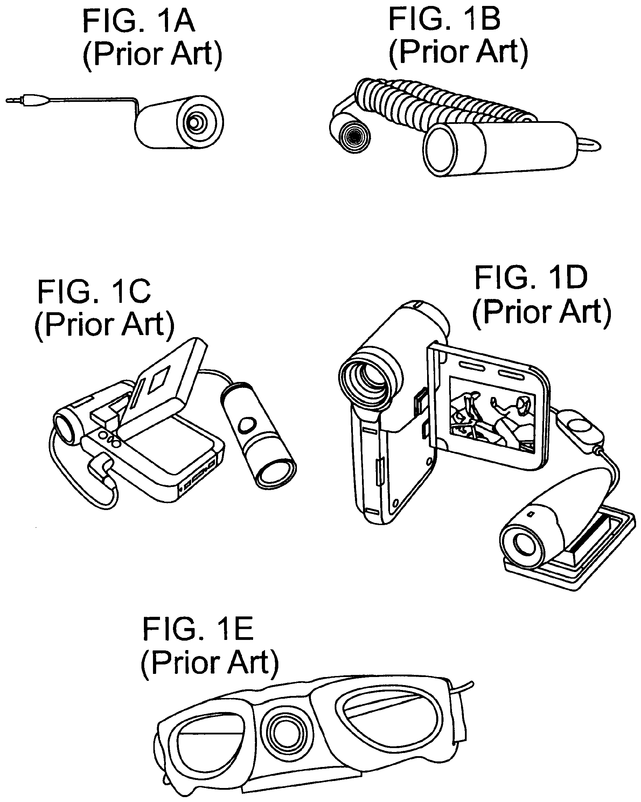

First-person video cameras are a relatively new product category that have been adapted to capture POV video by action sports enthusiasts in a hands-free manner. Conventional first-person video cameras primarily comprise a lens that must be tethered to a separate digital video recorder or camcorder. FIGS. 1A and 1B present pictorial views of prior art first-person video cameras requiring a tethered lens approach to capturing first-person video recording. FIG. 1A presents a Twenty20™ device and FIG. 1B presents a Viosport™ device. FIGS. 1C and 1D present pictorial views of prior art video cameras tethered to camcorders for implementing the tethered lens approach to capturing first-person video recording. FIG. 1C and FIG. 1D present Samsung™ devices.

These products are not generally hands-free products, and consumers have been employing their own unique mounting techniques to permit "hands-free" video recording of action sports activities. FIG. 1E presents a pictorial view of a tethered camera attempting to facilitate hands-free POV video recording. FIG. 1E presents a Blackeye™ device. These recent devices attempt to convey image data from "tethered" cameras to separate camcorders through IR signals to eliminate the tethering cables.

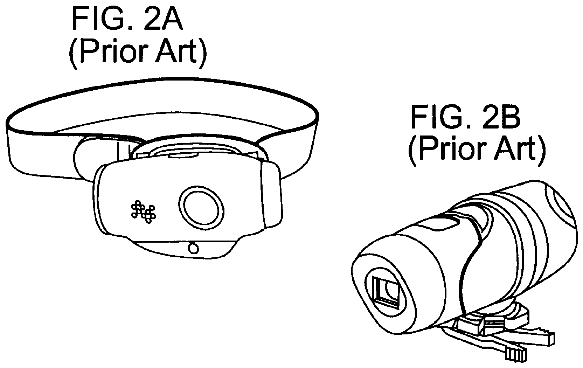

More recently, integrated hands-free, POV action sports video cameras have become available. FIGS. 2A and 2B present are pictorial views of two prior art products implementing integrated solutions to first-person video recording. These products are still in their infancy and may be difficult to use well.

US 5557329A discloses a video camera having a group of lenses forming an optical image from a photographed object, a lens mount for supporting the group of lenses, and an image pickup device installed on the optical axis, for converting the optical image into an electric signal. The video camera further includes an image pickup device rotator for rotating the image pickup device with respect to the lens mount along the optical axis so that the photographed object can be displayed on the image medium in a rotated state by a predetermined angle. Therefore, the operation for displaying the photographed object on the screen of an image medium in a rotated state, can be performed easily, precisely and with versatility, without rotating the video camera itself.

US 2006/274171A1 discloses a portable hand held optical reader having a specially constructed two-dimensional image sensor array, which is operational in a bar code decoding mode and in a picture taking mode. The specially constructed image sensor array, in one embodiment, is a hybrid monochrome and color image sensor pixel array, wherein a first subset of the pixels are monochrome pixels devoid of wavelength selective color filter elements and a second subset of the pixels are color sensitive pixels including wavelength selective color filter elements.

US 5218439A discloses a photo video camera device for photographing a visible image on a negative film and/or a positive film developed. The photo video camera device includes a lens barrel, a solid-state image pickup device fixed to the lens barrel, a rotating mechanism for rotating the lens barrel with the solid-state image pickup device, and a supporting member for supporting the lens barrel with the solid-state image pickup device so that the lens barrel and the solid-state image pickup device are rotatable together relative to the supporting member by the rotating mechanism. Accordingly, there occurs no misalignment of axes between a lens system retained in the lens barrel and the solid-state image pickup device, and no dust or the like sticks to the lens system and the solid-state image pickup device.

US2004114919 A1 and WO9907138 A1 disclose camera mounting mechanisms using interleaved housing and mounting rails and cavities.

### Summary of the Disclosure

The present invention provides a camera as detailed in claim 1. Also, a method according to the invention is provided in accordance with claim 21. Further, a method according to the invention is provided according to claim 22. Advantageous features are provided in dependent claims The invention is set out in the appended set of claims; the further examples called embodiments in the description are illustrative examples and not necessarily claimed embodiments.

A portable digital video camera (or camcorder) includes a camera housing and a lens.

Some embodiments of the portable digital video camera (or camcorder) comprise an integrated hands-free, POV action sports digital video camera (or camcorder).

Some embodiments of the portable digital video camera (or camcorder) or the integrated hands-free, POV action sports digital video camera (or camcorder) include an image sensor for capturing image data.

Some embodiments of the portable digital video camera (or camcorder) or the integrated hands-free, POV action sports digital video camera (or camcorder) include a manual horizon adjustment control for adjusting an orientation of a horizontal image plane recorded by the image sensor with respect to a housing plane of the camera housing.

Some embodiments of the portable digital video camera (or camcorder) or the integrated hands-free, POV action sports digital video camera (or camcorder) include a laser alignment system with one or more laser sources capable of projecting light emissions to define a horizontal projection axis that is coordinated with orientation of the horizontal image plane.

Some embodiments of the portable digital video camera (or camcorder) or the integrated hands-free, POV action sports digital video camera (or camcorder) include a microphone and a manually operable switch for controlling an audio and/or video data capturing operation, the switch having a activator that covers the microphone whenever the switch is in the OFF position.

Some embodiments of the portable digital video camera (or camcorder) or the integrated hands-free, POV action sports digital video camera (or camcorder) include a "quick-release" mounting system that can be used in conjunction with the laser alignment system to adjust the image capture orientation for pitch, yaw, and roll.

Additional aspects and advantages will be apparent from the following detailed description of preferred embodiments, which proceeds with reference to the accompanying drawings.

### Brief Description of the Drawings

Fig. 1 is a set of pictorial views of four prior art products implementing a tethered lens approach to capturing first-person video recording.
Fig. 2 is a set of pictorial views of two prior art products implementing integrated solutions to first-person video recording.
FIGS. 3A, 3B, 3C, 3D, 3E, and 3F are, respectively, front perspective, back perspective, side elevation, front elevation, back elevation, and top plan views of an embodiment of an integrated hands-free, POV action sports digital video camera.
FIG. 4A is a front perspective view of an embodiment of an integrated hands-free, POV action sports digital video camera, showing alternative positioning of a switch and representative alternative rotation of a rotary horizontal adjustment controller.
FIG. 4B is a back perspective view of an embodiment of an integrated hands-free, POV action sports digital video camera, showing a representative alternative number of rail cavities and an optional detent within a rail cavity.
FIG. 5 is a cross-sectional side view of an embodiment of an integrated hands-free, POV action sports digital video camera.
FIG. 6 is an exploded view of an embodiment of mechanical components of an integrated hands-free, POV action sports digital video camera.
FIG. 7 is an annotated exploded view of optical and mechanical components of an integrated hands-free, POV action sports digital video camera.
FIGS. 8A and 8B are fragmentary cross-sectional views of the lens system of the camera of FIG. 7, showing, respectively, a standard lens and the standard lens fitted with a lens filter.
FIG. 9 is a partly exploded view of a versatile mounting system demonstrating ease of adjustment of camera mount orientation coupled with ease of camera detachment with retention of the mount orientation.
FIG. 10 is a front perspective view of a standard mount, employing a rail plug having two rails and two detents.
FIGS. 11A, 11B, 11C, and 11D are, respectively, back elevation, front elevation, side elevation, and top plan views of the versatile mounting system, demonstrating the matable relationship between the camera of FIGS. 3A-3E with the standard mount shown in FIG. 10.
FIG. 12 is a perspective view of an alternative mount, employing two mounting rails and two detents.
FIG. 13A is a front perspective view of a pole mount system, employing the mount of FIG. 12.
FIGS. 13B and 13C are cross-sectional side views of a pole mount system, respectively showing unlocked and locked configurations.
FIGS. 13D and 13E are front perspective views of a pole mount system, respectively showing unlocked and locked configurations about a handle bar.
FIG. 14A is a front perspective view of an alternative pole mount system, employing the mount of FIG. 12 and a strap.
FIGS. 14B and 14C are respective side and front views of the alternative pole mount of FIG. 14A.
FIG. 14E is a front perspective view of a pole mount the alternative pole mount of FIG. 14A locked about a pole.
FIG. 15A is a front perspective view of a goggle mount, employing a strap entrance facing in the opposite direction of the mounting rails.
FIG. 15B is a side view of an alternative goggle mount, employing a strap entrance facing in the same direction of the mounting rails.
FIG. 15C is a front perspective view of the alternative goggle mount of FIG. 15B mounted upon a goggle strap.
FIG. 16 is a front perspective view of a vented helmet mount, adapted for employing a strap for attachment to a vented helmet.
FIG. 17 is a front perspective view of another alternative goggle mount, adapted for employing a strap for attachment to a goggle strap.
FIG. 18 is a front perspective view of an alternative pole mount system, employing the rail plug of FIG. 10.

### Detailed Description of Preferred Embodiments

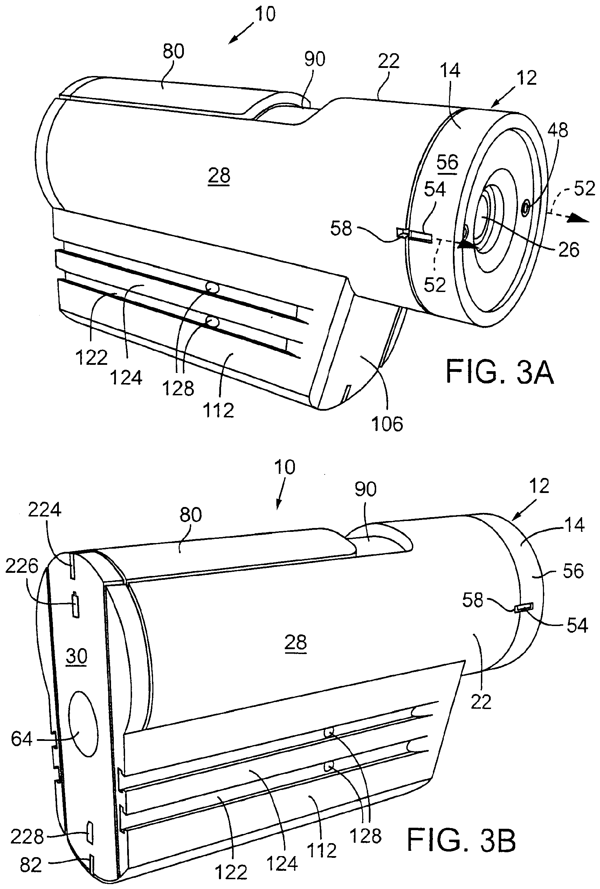

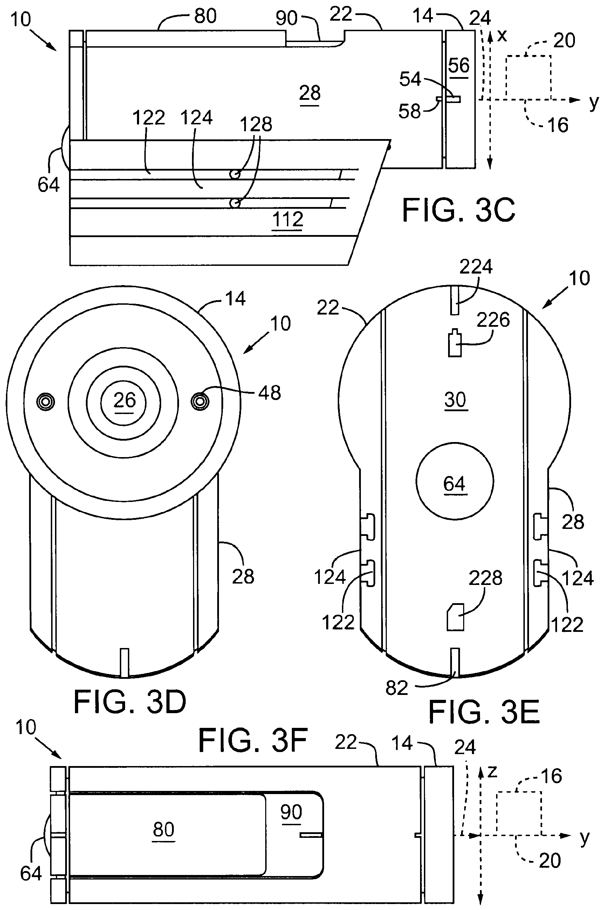

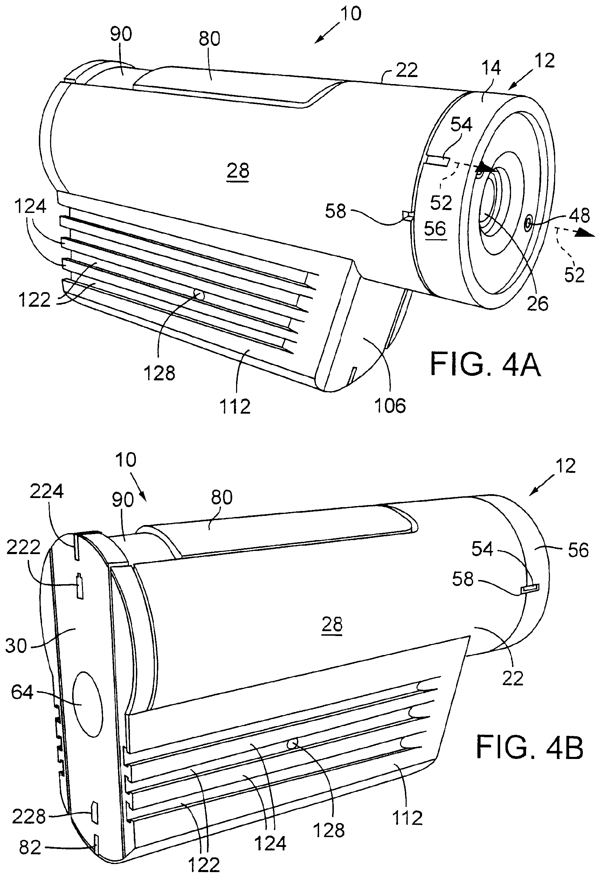

FIGS. 3A, 3B, 3C, 3D, 3E, and 3F are, respectively, front perspective, back perspective, side elevation, front elevation, back elevation, and top plan views of an embodiment of an integrated hands-free, POV action sports digital video camera 10, and FIGS. 4A and 4B are front and back perspective views, respectively, of an alternative configuration and alternative embodiment of the digital video camera 10. For purposes of this description, the term "camera" is intended to cover camcorder(s) as well as camera(s). An example of such a digital video camera 10 is included in the VholdR™ system, marketed by Twenty20, LLC of Seattle, Washington.

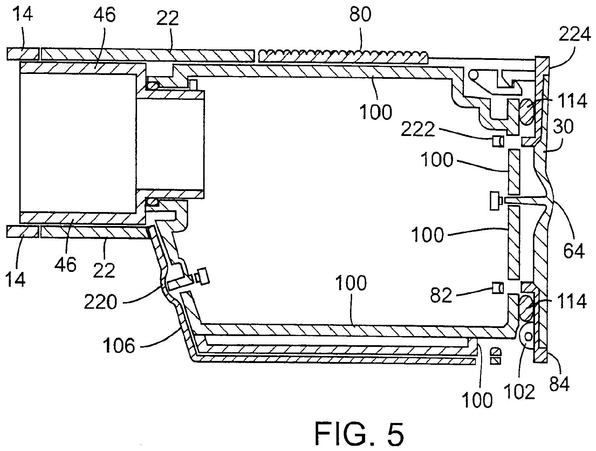

FIGS. 5, 6, 7, 8A, and 8B show optical and mechanical components of the digital video camera 10. With reference to FIGS. 3A-3F, 4A, 4B, 5, 6, 7, 8A, and 8B, some embodiments of the digital video camera 10 include a manual horizon adjustment control system 12 including a manual horizon adjustment control for adjusting an orientation of a horizontal image plane 16 of an image recorded by an image sensor 18 with respect to a housing plane 20 (along a vertical cross-section) of a camera housing 22. An exemplary image sensor 18 may be CMOS image capture card, and provide for minimum illumination of 0.04 Lux @ f/1.2, offer high sensitivity for low-light operation, low fixed pattern noise, anti-blooming, zero smearing, and low power consumption.

With reference to FIGS. 3A, 3C, 3F, 4A, 6, and 7, in some embodiments, the manual horizon adjustment control is a rotary controller 14 that rotates about a control axis 24 such that manual rotation of the rotary controller 14 changes the orientation of the horizontal image plane 16 with respect to the housing plane 22. The manual horizon adjustment control can be used to offset the horizontal image plane 16 with respect to the pitch, yaw, and roll of the mounting position of the camera housing 22.

In some preferred embodiments, the rotary controller 14 is positioned about a lens 26 and cooperates with a lens shroud 32 to support the lens 26 within the camera housing 22 such that manual rotation of the rotary controller 14 rotates the lens 26 with respect to the camera housing 22. In other embodiments, the lens 26 may remain fixed with respect to the camera housing 22 even though the rotary controller 14 rotates around the lens 26. In some embodiments, the lens 26 is a 3.6 mm, 1/4" 4G type, glass eye lens with a 90° viewing angle and a focal length covering a large range, such as from arm's length (e.g., 500 mm) to infinity, which focuses visual information onto the image sensor 18 at a resolution, such as at 640 x 480. Skilled persons will appreciate that a variety of types and sizes of suitable lenses are commercially available.

In some preferred embodiments, the image sensor 18 is supported in rotational congruence with the orientation of the rotary controller 14 such that manual rotation of the rotary controller rotates the image sensor 18 with respect to the housing plane 20 of the camera housing 22. When the image sensor 18 has a fixed relationship with the orientation of the rotary controller 14, the image data captured by image senor 18 does not require any post capture horizon adjustment processing to obtain play back of the image data with a desired horizontal image plane 16. In particular, the rotary controller 14 can be set to a desired horizontal image plane 16 and the image sensor 18 will capture the image data with respect to the orientation of the horizontal image plane 16. In some embodiments, the image sensor 18 may remain fixed with respect to the camera housing 22 even though the rotary controller rotates around the image sensor 18.

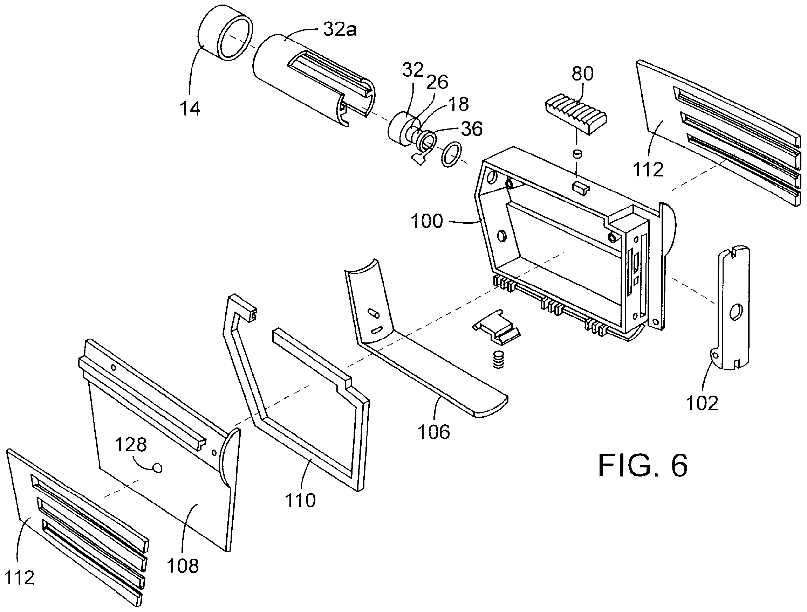

With reference to FIGS. 6, 7, 8A, and 8B, in some embodiments, an exemplary optical assembly 34 shows how the image sensor 18 and the lens 26 may be supported in rotational congruence by the cooperation of the lens shroud 32, an internal rotation controller 36, and the rotary controller 14. In some preferred embodiments, the rotary controller 14 may be separated from the camera housing 22 by a gap 37 to facilitate the rotation of the rotary controller 14 with respect to the camera housing 22.

A lens cap holder 38 may be secured to the rotary controller 14 by screw threads and cooperates with an O-ring 40a and to provide support for a lens cover 42 (such as a piece of glass). A lens holder 44 and a lens assembly holder 46 may also be employed to support the lens 26 in a desired position with respect to the other components in the optical assembly 34. The lens assembly holder 46 may be secured to the lens cap holder 38 by screw threads and an O-ring 40b. An O-ring or bearings 43 may be employed between the lens assembly holder 46 and the main housing 100 to facilitate the rotation of the lens assembly holder 46 about the control axis 24 with respect to the main housing 100. A set screw 45 may be employed to secure the lens assembly holder 46 of optical assembly 34 to the main housing 100 with impeding the rotation of the lens assembly holder 46 or the components within it. In some embodiments, the rotary controller 14, the lens cap holder 38, the O-ring 40a, the lens cover 42, the lens shroud 32, the laser sources 48, the lens 26, the lens holder 44, the image sensor 18, the internal rotation controller 36, the O-ring 40b, and the lens assembly holder 46 of optical assembly 34 may rotate together. Skilled persons will appreciate that several of these components may be fixed with respect to the camera housing 22 or their synchronized rotation may be relaxed. For example, the lens cover 42, the lens 26, and the lens holder 44 need not rotate.

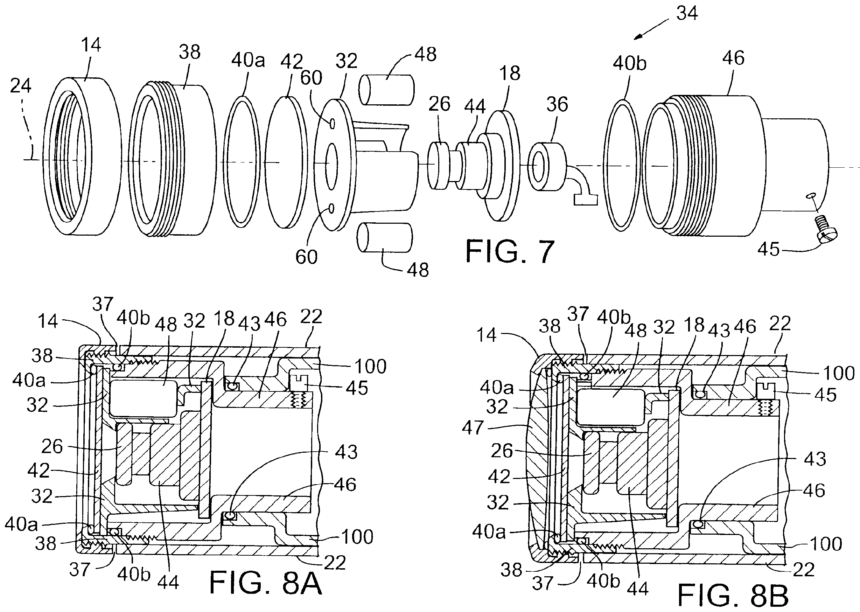

With reference to FIG. 8B, the rotary controller 14 may support a lens filter or other lens component, or the rotary controller may include screw threads or other means to enable attachment of additional or alternative lens components.

In some embodiments, the rotary controller 14 cooperates with an encoder to orient the image sensor 18 to the desired horizontal image plane 16. Alternatively, the encoder could guide post capture horizon adjustment processing to adjust the horizontal image plane 16 of the captured image so that it is transformed to play back the image data with the encoded horizontal image plane 16.

In some embodiments, the rotary controller 14 is positioned in an arbitrary location away from the lens 26 and/or in an arbitrary relationship with the position of the image sensor 18. In one example, the rotary controller 14 may positioned on a side 28 of the camera housing 22 or a back door 30 and may remotely control the orientation of the image sensor 18 or may control an encoder. Skilled person will appreciate that an arbitrarily located manual horizon adjustment control need not be a rotary and may be electronic instead of mechanical.

In some embodiments, the rotary controller 14 provides greater than or equal to 180 degree rotation of the horizontal image plane 16 with respect to the housing plane 20 of the camera housing 22 in each of the clockwise and counterclockwise directions. In one example, the rotary controller provides 180 degrees plus greater than or equal to six degrees of additional rotation in each direction, providing a 192-degree rotation of the horizontal image plane 16 with respect to the housing plane 20. This adjustability includes embodiments in which the orientation of the rotary controller 14 is in congruence with the orientation of the image sensor 18 as well as embodiments employing an encoder. Preferably, both the lens 26 and the image sensor 18 rotate together 192 degrees within a pivoting hermetically sealed capsule. This means no matter how an operator mounts the digital video camera 10, the image sensor 18 can be rotated to capture a level world.

With reference to FIGS. 4A and 4B, in some embodiments, a rotation indicator 54 is provided on an exterior surface 56 of the rotary controller 14. The rotation indicator 54 may take the form of a horizontal notch or raised bar that may or may not be colored differently from the color of camera housing 22. The camera housing 22 may have a similar or smaller notch or raised bar 58 of the same or different color that is fixed in one position. The dislocation between the rotation indicator 54 and the horizontal notch 58 provides a physical indication of the amount that the rotary controller 14 is displaced from its "home" position with respect to the camera housing 22.

In some preferred embodiments, the rotation indicator 54 and the horizontal notch 58 are in a collinear alignment (in the "home" position) when the horizontal image plane 16 is perpendicular to the housing plane 20. Thus, if the digital video camera 10 were set on a level horizontal surface and the two notches were collinear, the horizontal image plane would be horizontal.

With reference to FIGS. 3A, 3C, 3D, 3F, 4A, 7, and 8 in preferred embodiments, one or more laser sources 48 are fitted within the rotary controller 14, are oriented with the horizontal image plane 16, and are capable of projecting light emission(s) to define a horizontal projection axis or plane 52 that is parallel with or coplanar with the horizontal image plane 16. Thus, manual rotation of the rotary controller 14 changes the orientation of the horizontal projection axis 52 with respect to the housing plane 20 as the orientation the horizontal image plane 16 is changed with respect to the horizontal projection axis 52. The beam(s) of light forming the horizontal projection axis can be used as a guide by an operator to facilitate adjustment of the horizontal image plane by simple rotation of the rotary controller after the camera housing 22 has been mounted.

In some embodiments, a single laser source 48 may employ beam shaping optics and or a beam shaping aperture, filter, or film to provide a desired beam shape such as a line, lines of decreasing or increasing size, or a smiley face. In some embodiments, only a single beam shape is provided. In some embodiments, multiple beams shapes are provided and can be exchanged such as through manual or electronic rotation of a laser filter. Skilled persons will appreciate that two or more laser sources 48 may be outfitted with beam shaping capabilities that cooperate with each other to provide the horizontal projection axis 52 or an image that provides the horizontal projection axis 52 or other guidance tool.

In some embodiments, two laser sources 48 (or two groups of laser sources) are employed to project two beams of light that determine the horizontal projection axis 52. The two laser sources 48 may be mounted on opposite sides of the lens 26 such that their positions determine a laser mounting axis that bisects the lens 26. In some embodiments, the lens shroud 32 provides support for laser sources 48 such that they are positioned to emit light through apertures 60 in the lens shroud 32 (FIG. 7). In some embodiments, an alternative or additional optical support barrel 32a may support the laser source 48 and the other optical components.

The laser sources 48 may be diode lasers that are similar to those used in laser pointers. The laser sources 48 preferably project the same wavelength(s) of light. In some embodiments, an operator may select between a few different wavelengths, such as for red or green, depending on contrast with the background colors. In some embodiments, two wavelengths may be projected simultaneously or alternately. For example, four laser sources may be employed with red and green laser sources 48 positioned on each side of lens 26 such that red and green horizontal projections axes 52 are projected simultaneously or alternately in the event that one of the colors does not contrast with the background.

In some embodiments, the laser sources 48 may be responsive to a power switch or button 64, which in some examples may be located on the back door 30 of the camera housing 22. A rotation of horizon adjustment control system 12 or the rotary controller 14 may provide the laser sources 48 with an ON condition responsive to a timer, which may be preset such as for five seconds or may be a user selectable time period. Alternatively, a single press of the button 64 may provide the laser sources 48 with an ON condition with a second press providing an OFF condition. Alternatively, a single press of the button 64 may provide an ON condition responsive to a timer, which may be preset such as for five seconds or may be a user selectable time period. Alternatively, the button 64 may require continuous pressure to maintain the laser sources 48 in an ON condition. The button 64 may also control other functions such as standby mode. Skilled persons will appreciate that many variations are possible and are well within the domain of skilled practitioners.

Skilled persons will also appreciate that any type of video screen, such as those common to conventional camcorders may be connected to or be a part of camera housing 22. Such video screen and any associated touch display may also be used as feedback for orientation in conjunction with or separately from the laser sources 48. Skilled persons will appreciate that the video screen may take the form of a micro-display mounted internally to the camera housing 22 with a viewing window to the screen through the camera housing 22 or may take the form of an external LCD screen.

With reference to FIGS. 3A, 3b, 3C, 3F, 4A, 4B, 5, and 6, in preferred embodiments, the digital video camera 10 has a manually operable switch activator 80 that controls the recording condition of the image sensor 18 and/or conveyance of the acquired image data to a data storage medium, such as a on a two-gigabyte MicroSD card. In some embodiments, the digital video camera 10 is designed to use pulse power to conserve battery life while monitoring the switch activator 80. When the switch activator 80 is positioned to the ON position, the pulse power system is instructed to provide full power to the electronics and begin recording immediately; similarly, when the switch activator 80 is positioned to the OFF position, the pulse power system is instructed to cut power to the electronics and stop recording immediately.

In some preferred embodiments, when the switch activator 80 is slid or toggled, it moves a magnetic reed that is recognized from an impulse power sensor. Once the sensor recognizes the magnetic reed has been toggled to the ON position, the pulse power system is then triggered to power up most or all of the electronics of the digital video camera 10, including all of the electronics required for recording as well as selected other electronics or simply all the electronics. Once full power is provided the system electronics, a feed from the image sensor 18 begins encoding and writing to the data storage medium. As soon as the first frames are written to the data storage medium, a signal is sent to an LED 82 to indicate via a light pipe 84 that the digital video camera 10 is recording. Thus, activation of the switch activator 80 initiates recording nearly instantaneously.

In some embodiments, the switch activator 80 powers up the electronics and initiates recording from a standby mode such as after the button 64 has been pushed to activate the pulse power mode. In other embodiments, the switch activator 80 powers up the electronics and initiates recording directly without any pre-activation. In some embodiments, a video encoder that cooperates with the image sensor and a microprocessor provides instructions the video encoder. In some embodiments, the switch activator 80 is adapted to substantially simultaneously control supply of power to the microprocessor, the image sensor, and the video encoder, such that when the switch activator 80 is placed in the ON position the microprocessor, the image sensor, and the video encoder all receive power substantially concurrently and thereby substantially instantaneously initiate a video data capturing operation.

In some embodiments, an audio encoder cooperates with the microphone 90, and the microprocessor provides instructions to the audio encoder. In some embodiments, the switch activator 80 is adapted to substantially simultaneously control the supply of power to the microphone 90 and the audio encoder such that when the switch activator 80 is placed in the ON position, the microprocessor, the microphone and the audio encoder both receive power substantially concurrently and thereby substantially instantaneously initiate an audio data capturing operation.

In some embodiments, when the switch activator 80 is placed in the OFF position, the microprocessor, the image sensor, and the video encoder all cease to receive power substantially concurrently and thereby substantially instantaneously cease the video data capturing operation. In some embodiments In some embodiments, when the switch activator 80 is placed in the OFF position, the microprocessor, the microphone 90, and the audio encoder all cease to receive power substantially concurrently and thereby substantially instantaneously cease the audio data capturing operation.

In some embodiments, the microprocessor, the image sensor 18, the video encoder, the microphone 90, and the audio encoder all receive power substantially concurrently and thereby substantially instantaneously initiate the video data and audio data capturing operations. In some embodiments, the microprocessor, the image sensor 18, the video encoder, the microphone 90, and the audio encoder all cease to receive power substantially concurrently and thereby substantially instantaneously cease the video data and audio data capturing operations.

In some embodiments, the digital video camera 10 of claims 18-22 in which the switch activator 80 controls supply of power to additional electronics such that the additional electronics are deactivated when the switch activator 80 is in the OFF position and such that the additional electronics are activated when the switch activator 80 is in the ON position.

Skilled persons will appreciate that the switch activator 80 may be designed to have more than two slide settings. For example, in addition to ON and OFF settings for recording, switch activator 80 may provide an intermediate setting to activate laser sources 48, to activate one or more status indicators, or initiate other functions in the digital video camera 10.

The use of a magnetic reed switch as an embodiment for the switch activator 80 prevents water or other fluids from entering through the camera housing 22. Skilled person with appreciate that other waterproof ON/OFF switch designs are possible. In preferred embodiments, digital video camera 10 also employs a waterproof microphone 90, such as an omni-directional microphone with a sensitivity (0dB = 1V/Pa, 1KHz) of -44 ± 2 dB and a frequency range: 100-10,000 Hz, for capturing audio data and providing it to the data storage medium or to a second data storage medium. Alternatively, the camera housing 22 may include breathable, watertight materials (such as GoreTex™) to prevent the egress of water without requiring a water proof microphone 90. Skilled persons will appreciate microphones 90 with a large variety of operational parameters are commercially available or can be manufactured to suit desired criteria.

In some embodiments, the microphone 90 is positioned beneath the switch activator 80 such that the switch activator 80 covers the microphone 90 whenever the switch activator 80 is in the OFF position and such that the switch activator 80 exposes the microphone 90 whenever the switch activator 80 is in the ON position. The audio data capturing operation is preferably deactivated when the switch activator 80 is in the OFF position and that the audio data capturing operation is preferably activated the switch activator 80 is in the ON position. The ON and OFF condition of the audio data capturing operation may be controlled by the switch activator 80 in conjunction with the ON and OFF condition of the video capturing operation.

With reference to FIGS. 5 and 6, in some embodiments, the camera housing 22 includes a main housing 100 that supports the switch activator 80, a front and bottom trim piece 106, and the back door 30 which is connected to the main housing 100 through a hinge 102. In some embodiments, the back door 30 may be removable through its hinge 102 to allow connection of accessories to the main housing 100 for extended functionality. The back door 30 may provide an area of thinner material to permit compression of the button 64. Gaskets 114 may be seated between the main housing 100 and the back door 30 to provide waterproofing. A housing cover 108 may be connected to the main housing 100 through a rubber gasket 110 which also enhances the waterproof characteristics of the camera housing 22.

Side caps 112 may be ultrasonically welded to the exterior surfaces of the housing cover 108 and the lower portion of the main housing 100, which form the lower portions of the sides 28 of the camera housing 22. In some embodiments the camera housing 22 is made from brushed aluminum, baked fiberglass and rubber. In particular, the main housing 100, the housing cover 108, and the side caps 112 may be made from aluminum. The front and bottom trim piece 106 may also be ultrasonically welded to the main housing 100.

With reference to FIGS. 3A, 3B, 4A, 4B, 6, and 9, in preferred embodiments, the digital video camera 10 includes part of a mounting system 120 that has two or more housing rail cavities 122 an two or more interleaved housing rails 124 on each side 28 of camera housing 22 for engaging a versatile mount 126. An example of such a mounting system 100 is the TRail™ mounting system, marketed by Twenty20, LLC of Seattle, Washington.

The housing rail cavities 122 and housing rails 124 may be formed by cut outs in the side caps 112 that are mounted to the main housing 100. In some embodiments, digital video camera 10 is bilaterally symmetrical and has an equal number of housing rail cavities 122 on each of the side caps 112 and an equal number of housing rails 124 on each of the side caps 112. In some embodiments, digital video camera 10 may for example provide two housing rail cavities 122 (such as shown in FIGS. 3A and 3B) or three housing rail cavities 122 in each side cap 112 (such as shown in FIGS. 4A and 4B). Skilled persons will appreciate, however, that in some embodiments, digital video camera 10 need not be symmetrical and may have an unequal number of rail cavities 122 on its side caps 112.

In some embodiments, the rail cavities 122 have a "T"-like, wedge-like, or trapezoid-like cross-sectional appearance. Skilled persons will appreciate that the dimensions of the stem or lateral branches of the "T" can different. For example, the stem can be thicker than the branches or one or more of the branches may be thicker than the stem; similarly, the stem can be longer than the branches, and one or more of the branches may be longer than the stem. The cross-sectional shapes may have flat edges or corners, or the edges or corners may be rounded. Skilled persons will also appreciate that numerous other cross-sectional shapes for the rail cavities are possible and that the cross-sectional shapes of different housing rail cavities 122 need not be the same whether in the same side cap 112 or in different side caps 112. Similarly, the housing rail cavities 122 may have different lengths and the housing rails 124 may have different lengths. The bottom of trim piece 106 may be alternatively or additionally fitted with housing rails 124.

In some embodiments, one or more of the housing rail cavities 122 may contain one or more bumps or detents 128. In some embodiments, each side 28 of camera housing 22 contains at least one bump or detent 128. In some embodiments, each housing rail cavity 122 contains at least one bump or detent 128. In some examples, however, only a single housing rail cavity 122 on each side 28 contains a bump or detent 128. Skilled persons will appreciate that the different sides 28 need not contain the same number of nubs or detents 128.

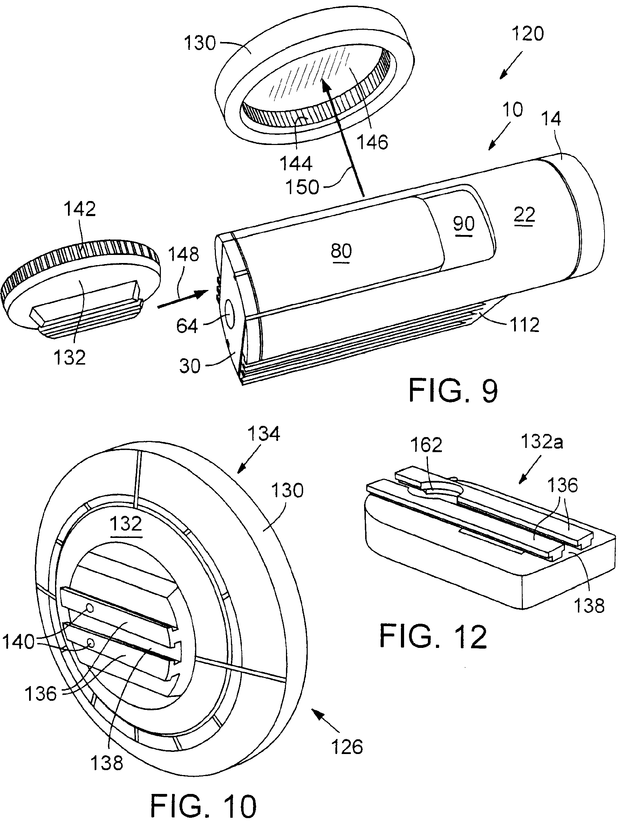

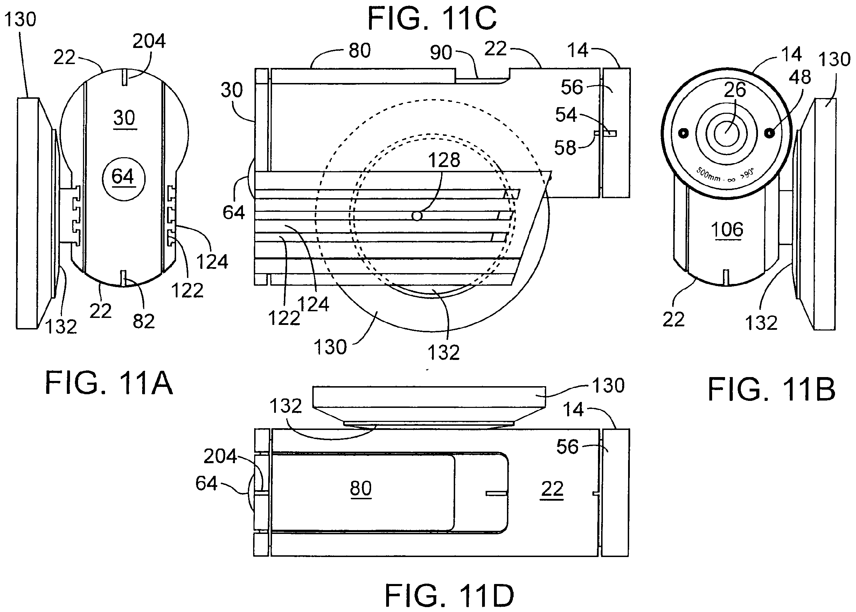

FIG. 9 shows a mount base 130 and a rail plug 132 that fit together to form a flat surface mount 134 shown in FIG. 10. FIGS. 11A-11D (FIG. 11) depict different views of the camera housing 22 mated with the flat surface mount 126. With reference to FIGS. 9-11, the rail plug 132 contains one or more mount rails 136 that are adapted to mate with the housing rail cavities 122 on camera housing 22. Similarly, the rail plug 132 contains one or more mount rail cavities 138 that are adapted to mate with the housing rails 124 on camera housing 22. The mount rails 136 may have the same or different cross-sectional shapes as those of housing rails 124, and the mount rail cavities 138 may have the same or different cross-sectional shapes as those of the housing rail cavities 122. In some preferred embodiments, the rails 124 and 136 and cavities 122 and 138 have the same cross-sectional profiles.

In some embodiments, one or more of the mount rails 136 on the rail plug 132 may contain one or more detents or bumps 140. In some embodiments, each mount rails 136 contains at least one detent or bump 140. In some examples, however, only a single mount rail 136 contains a detent or bump 140. The detents or bumps 140 are adapted to mate with the bumps or detents 128 such that if the camera housing 22 has detents 128 then the rail plug has bumps 140 or if the camera housing 22 has bumps 128 then the rail plug has detents 140. Skilled persons will appreciate that in some alternative embodiments, the housing rails 124 have the bumps or detents 128 and the mount rail cavities 138 have the detents or bumps 140.

The versatile mounting system 120 provides for ease of mounting and orientation of the digital video camera 10 with ease of detachment the digital video camera 10 with retention of the mounted orientation. In some embodiments, the base mount 130 may have a very small footprint and may be attached to a surface with an adhesive pad designed for outdoor use. After the base mount 130 has been attached to a surface, the rail plug 132 can be detached from the base mount 130.

In some embodiments, the rail plug 132 has a circumferential saw-toothed edge 142 that is mated to a saw-tooth-receiving inside edge 144 of a base mount cavity 146 adapted to receive the rail plug 132. In some embodiments, the rail plug 132 has a compression fit within the base mount 130. In some embodiments, hook and loop double-toothed Velcro™ may be used instead of or in addition to a compression fit technique to further secure the rail plug 132 within the base mount 130.

The mount rails 136 of the rail plug 132 can slide into the housing rail cavities 122 of the camera housing 22 as the mount rail cavities 138 of the rail plug 132 slide onto the housing rails 124 of the camera housing 22 as indicated by arrow 148 to secure the rail plug 132 to the camera housing 22. The mated detents and bumps 128 and 140 can be engaged to prevent unintended lateral movement of the rail plug 132 with respect to the camera housing 22. The rail plug 132 with the attached digital video camera 10 can be rotated from zero to 360 degrees within a plane perpendicular to the base mount 130 to capture a desired viewing angle. Then, the rail plug can be inserted or re-inserted into the base mount 130 as indicated by arrow 150. FIG. 11 shows from several different views how the mated digital video camera 10, the rail plug 132, and the mount base 130 appear when they a mated together.

In some embodiments, the rail plug 132 and base mount 130 may be made from a hard, but flexible material such as rubber or a polymer with similar properties, but skilled person will appreciate that the rail plug 132 and base mount 130 may be made from a hard or soft plastic. As the base mount 130 can be flexible, it can be attached to a variety of surfaces such as the surfaces of helmets, snowboard decks, skis, fuel tanks, windows, doors, vehicle hoods, etc. The material and flexibility of the material of the flat mount 126 may provide a "rubber" dampening affect as well as enhance rail sliding, rail engagement, and plug engagement. The mounting system 120 may also include a runaway leash (not shown).

When recording of an activity is completed, the rail plug 132 with the attached digital video camera 10 may be disengaged from the base mount 130 for safe storage or data uploading. The base mount 130 can be left attached to the surface and need not be re-attached and/or re-adjusted. Alternatively, the camera housing 22 may be disengaged from the rail plug 132, leaving the rail plug 132 engaged with the base mount 130 so that the original orientation of the mount rails 136 of the rail plug 132 is maintained to permit quick reattachment of the digital video camera 10 without requiring its orientation to be re-adjusted to the base mount 130 or the person, equipment, or vehicle to which the base mount 130 is mounted.

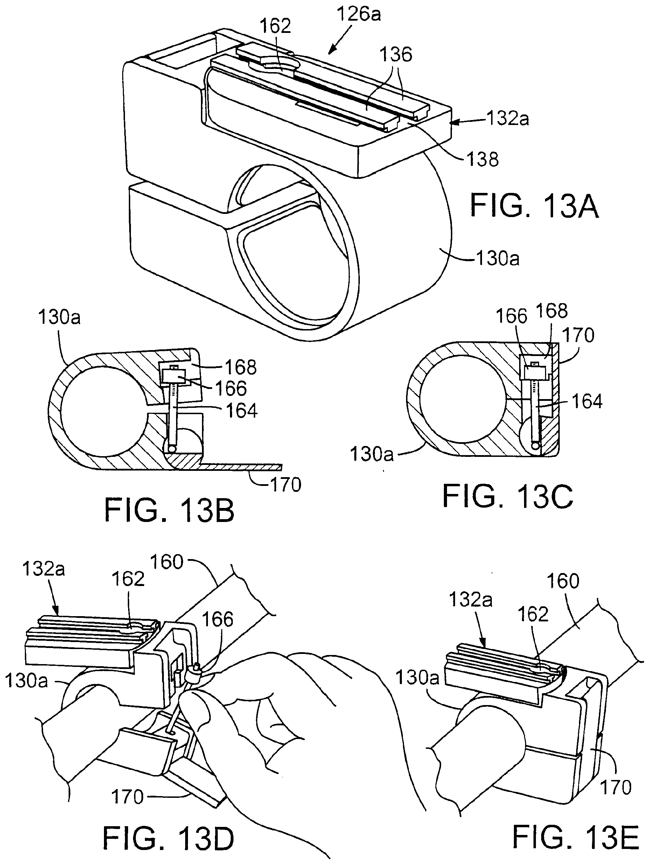

FIG. 12 shows an alternative rail plug 132a; and FIGS. 13A, 13B, 13C, 13D, and 13E (FIG. 13) show several views of the rail plug 132a with an alternative base mount 130a, including locked and unlocked configurations, to form a pole mount 126a for mounting on a pole 160 such as handle bars. With reference to FIGS. 12 and 13, the rail plug 132a may be used as a stand-alone mount with an adhesive backing or it may be used in conjunction with or integrated into one or more varieties of base mounts 130a. The rail plug 132a may be attached to the base mount 132a through the use of an adhesive mounting, through the use of Velcro™, through the use of a screw, through the use of other conventionally known means, or combinations thereof. The mount rails 136 may be formed to provide an aperture 162 to provide access for a screw and screwdriver to mount the rail plug 132a onto base mount 130a.

The base mount 130a is configured to open and close around poles 160, particularly poles of standardized recreational equipment and especially such poles having small diameters such as 1-1.5 inches (2.5- 3.8 cm). In some embodiments, the base mount 132a has a locking pin 164 with a head 166 that can be secured within a lock chamber 168. The locking pin 164 increases compression against the pole 160 to prevent the base mount 132a from rotating around the pole 160 after its desired positioned is established. The base mount 132a may also be provided with a pin door cover 170 to prevent debris from accessing the locking pin 164 or the lock chamber 170.

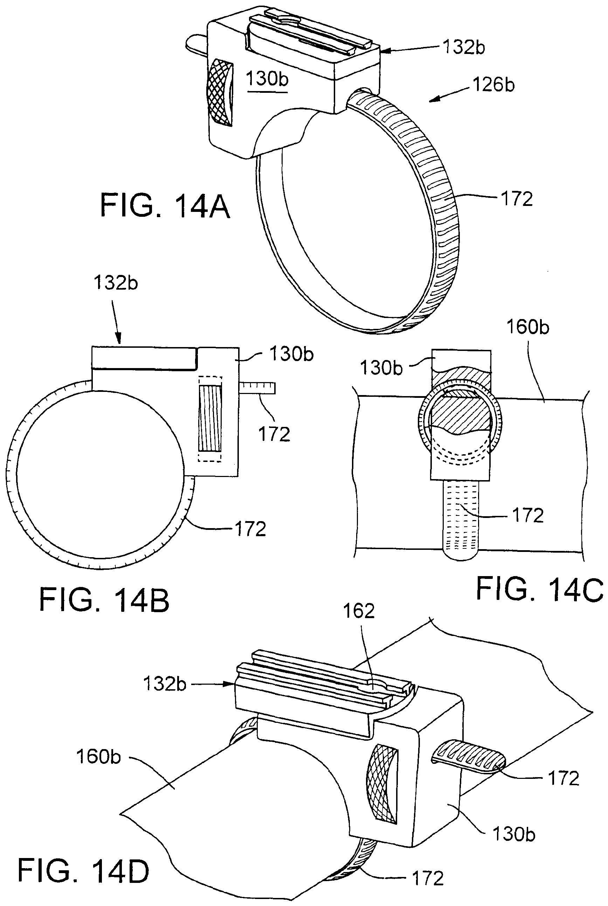

FIGS. 14A, 14B, 14C, 14D, and 14E (FIG. 14) show several views of a rail plug 132b with an alternative base mount 130b, including a strap 172, to form a pole mount 126b for mounting on a pole 160b such as a roll cage, a windsurfing mast, or a hang glider support. With reference to FIG. 14, in some embodiments, the strap 172 is large enough to accommodate poles 160b having a diameter up to four inches (12 cm) or larger. In some embodiments, a dial 174 may be employed to tighten and loosen the strap 172. In other embodiments, the dial 174 controls the swivel of the rail plug 132 with respect to the base mount 130b so that the side-to-side angle of the digital video camera 10 can be adjusted. As with the rail plug 132a, the rail plug 132b may be attachable to the base mount 130b or may be integrated with it.

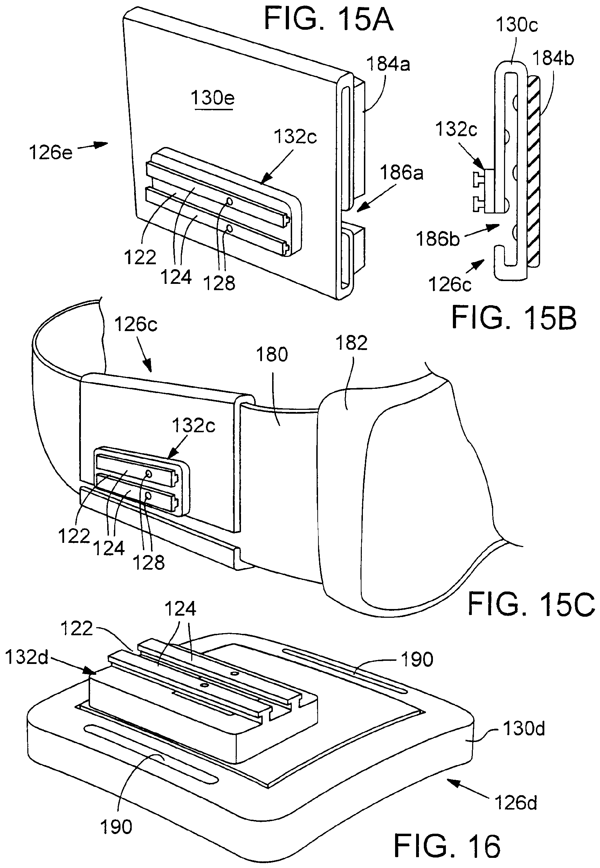

FIGS. 15A, 15B, and 15C (FIG. 15) shows one view of a rail plug 132e and shows several views of a rail plug 132c with an alternative base mount 130c to a band or strap mount 126c for mounting on a belt, strap, or band 180, such as the band 180 of a pair of goggles 182. As with previous embodiments, the rail plugs 132e and 132c may be attachable to the base mount 130c or may be integrated with it. With reference to FIG. 15A, the base mount 130c has a dampener 184a and a strap entrance 186a on an interior side of the base mount 130c, i.e., facing in the opposite direction of the mounting rails 136. The dampener 184a may be made from rubber or other suitable cushioning material to cushion a users head away form the digital video camera.

With reference to FIG. 15B, the base mount 130c has a dampener 184b on an interior side of the base mount 130c, i.e., facing in the opposite direction of the mounting rails 136. However, the base mount 130c has a strap entrance 186b on an exterior side of the base mount 130c, i.e., facing in the same direction of the mounting rails 136. FIG. 15C shows the base mount 130 of FIG. 15B mounted upon the strap 180 of the goggle 182. Skilled persons will appreciate that the rail plug 132a can be substituted for the rail plugs 132e or 132c.

FIG. 16 shows a rail plug 132d with an alternative base mount 130d to a helmet mount 126d for mounting on a vented helmet. The helmet mount 126 includes one or more slots 190 through which a strap can be used to secure the base mount 130d to a helmet through vent slots in the helmet. Skilled persons will appreciate that the rail plug 132a can be substituted for the rail plug 132d.

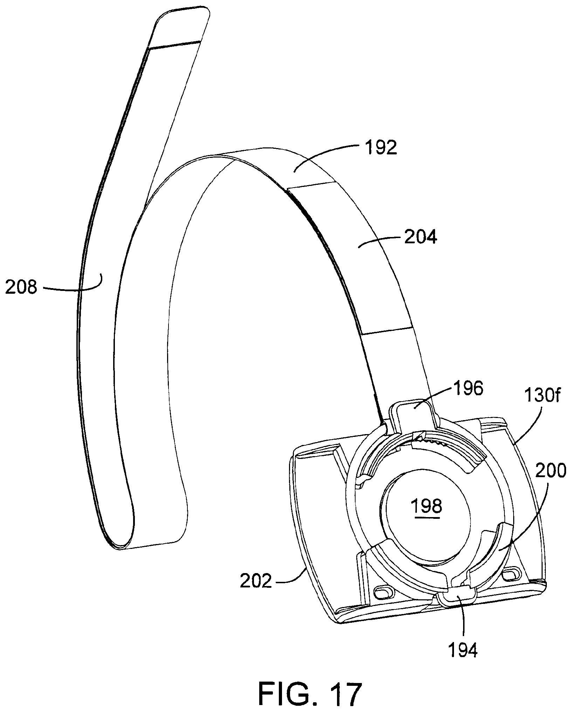

FIG. 17 is a front perspective view of another alternative goggle base mount 130f, adapted for employing a strap 192 for attachment to a goggle strap 180. The strap 192 can be looped through buckles 194 and 196 to secure the base mount 130f to the goggle strap 180. The base mount 130f is adapted to receive the circular rail plug 132 (of FIG. 10) that permits 360-degree rotation of the mounting rails 136. Such embodiments permit a user adjust the angle of the digital video camera 10 to be different then the vertical viewing angle of the user. For example, the user can be viewing down at the ground while the digital video camera 10 (and its image sensor 18) capture images straight ahead. In some embodiments, the base mount 130f may include pads 198 and 202 to dampen against vibrations and may include retaining tabs 200 to prevent the rail plug 132 from being inadvertently jarred loose. The strap 192 may also or alternatively include pads 204 and 208.

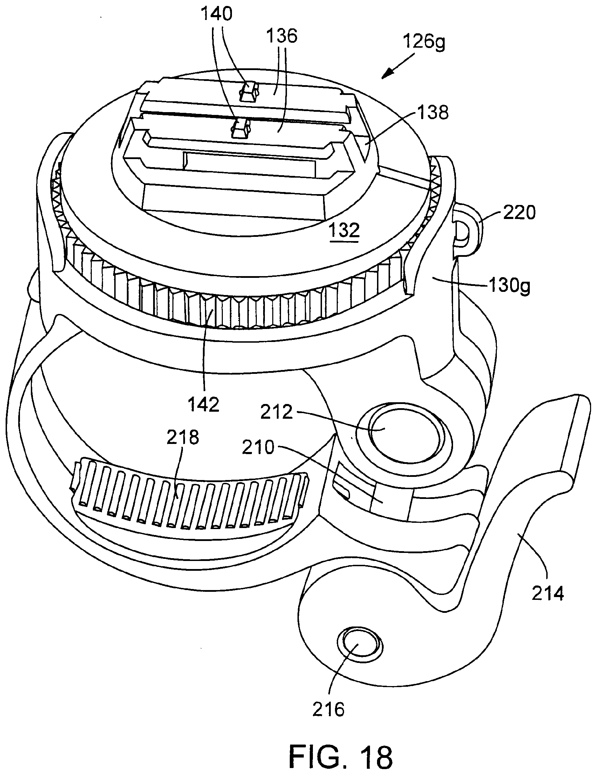

Skilled persons will appreciate that base mounts 130a through 130d can also alternatively be configured to receive a round rail plug 132 (of FIG. 10) that permits 360-degree rotation of the mounting rails 136. For example, FIG. 18 shows an alternative pole mount 126g having a base mount 130g adapted to receive the circular rail plug 132 that permits 360-degree rotation of the mounting rails 136. Such embodiments can facilitate compensation for handle bars or other poles 160 or 160b that may be angled backward or forward.

In some embodiments, the base mount 130g has a different locking mechanism than that of base mount 130a (FIG. 13). For example, in some embodiments, a locking pin 210 is attached by a hinge 212 to the base mount 130g, and the locking pin 210 is also attached at its other end to a pin door cover 214 through a hinge 216. The locking pin 210 cooperates with the hinge door cover 214 to increase compression against the pole 160 to prevent the base mount 130g from rotating around the pole 160 after its desired positioned is established. Skilled persons will appreciate that the base mount 130a may alternatively employ this locking mechanism. In some embodiments, the base mounts 130a and 130g include a pole grip 218 to help maintain a preferred orientation of the base mounts 130a and 130g with respect to the pole 160. In some embodiments, base mounts 130 and 130a-130g may include a leash ring 220 adapted to receive a lease line that may be attached to an associated rail plug 132 (132a-132d), the digital video camera 10, or the operator.

With reference again to FIGS. 3B, 3E, and 5, the button 64 (or an additional button 200) may control one or more status indicators such as the LED 82 that indicates via the light pipe 84 that the digital video camera 10 is recording. The button 64 (or an additional button 220) may, for example, also control operation of an LED 222 that indicates through a light pipe 224 the power status of a battery (not shown). In some embodiments, a single push controls two or more status indicators (or all of the status indicators, and may control the laser sources 48 and a recording standby mode as well).

In some embodiments, the status indicators may provide a different color depending on the status of the item in question. In some embodiments, green, yellow, and red LEDs are used to indicate whether the battery is completely charged, half-charged, or nearly depleted. Similarly, in some embodiments, green, yellow, and red LEDs are used to indicate whether the SD memory card is nearly empty, half-empty, or nearly full. In other embodiments, green light indicates greater than or equal to 80% space or charge, yellow light indicates greater than or equal to 30% space or charge, and red light indicates less than 30% space or charge. Skilled persons will appreciate that the number and meaning of colors can be varied. The camera housing 22 may provide symbols indicating what items the light pipes 84 and 204 designate, such as battery symbol 226 and memory card symbol 228 on the door 30.

To facilitate an easier and more manageable process for the video once it has been recorded, the digital video camera 10 may be designed to automatically segment the video into computer and web-ready file sizes. The segment can be automatically determined by the hardware during the recording process without intervention by the user. In some embodiments, software will automatically close a video file and open a new file at predefined boundaries. In some embodiments, the boundaries will be time-based, for example ten minutes for each segment or sizebased, for example 10MB for each segment. Additionally, the segmentation process may designed so that file boundaries are based on preset limits or so that the user can adjust the segment length to the user's own preferred time. In some embodiments, the video encoder (hardware or software based) will optimize the file boundary by delaying the boundary from the nominal boundary position until a period of time with relatively static video and audio, i.e., when there are minimal changes in motion. Skilled persons will appreciate, however, that in some embodiments, such segmentation may be implemented via software or hardware.

The digital video camera 10 is an all-in-one, shoot and store digital video camcorder and is designed to operate in extreme weather conditions and in a hands-free manner. The digital video camera 10 is wearable and designed for rugged environments (water, heat, cold, extreme vibrations), and the VholdR™ system includes application mounts 126 to attach to any person, equipment, or vehicle. The internal components of the digital video camera 10 may be silicon treated, coated, or otherwise insulated from the elements, keeping the digital video camera 10 operational, no matter the mud, the dirt, the snow and the rain.

The scope of the present invention should be determined by the following claims.

## Claims

1. An integrated point of view digital video camera (10) operable for mounting to a person, a vehicle, or equipment and operable for hands-free capture of video during motion of the person, the vehicle, or the equipment involved in an action sports activity, comprising:
a camera housing (22) containing a lens (26) and an image sensor (18), the camera housing (22) defining a housing plane (20) and the image sensor (18) operable for capturing light propagating through the lens (26) and representing a scene during motion of the person, the vehicle, or the equipment, the image sensor (18) producing image data representing an image of the scene that is oriented with respect to a horizontal image plane (16), and the lens (26) and the image sensor (18) having an orientation that is adjustable with respect to the housing plane (20);
a mounting mechanism adaptable for secure mounting of the camera housing (22) to a camera mount (126), whereby the mounting mechanism is operable to permit the person involved in the action sport activity to obtain hands-free point of view video during involvement in the action sport activity, the mounting mechanism (120) comprising a plurality of interleaved housing rail cavities (122) and housing rails (124) located on a side of the camera housing (22), each of the plurality of interleaved housing rail cavities (122) and housing rails (124) being configured to mate with corresponding mount rails (136) and mount rail cavities (138) of the camera mount (126), the mounting mechanism operable for slidably engaging and disengaging the side of the camera housing (22) with the camera mount (126), and wherein at least one mount rail (136) or mount rail cavity (138) of the plurality of mount rails (136) and mount rail cavities (138) include one or more first detents or bumps (140), and wherein at least one housing rail cavity (122) or housing rail (123) of the plurality of interleaved housing rail cavities (122) and housing rails (124) include one or more second bumps or detents (128), the one or more first detents or bumps (140) being configured to mate with the one or more second bumps or detents (128) respectively such that slideably engaging the plurality of interleaved housing rail cavities (122) and housing rails (124) of the camera housing (22) with the plurality of mounts rails (136) and mount rail cavities (138) of the camera mount (126) mates the one or more first detents or bumps (140) and the one or more second detents or bumps (128) to prevent unintended lateral movement of the camera mount (126) with respect to the camera housing (22);
a horizon adjustment control for adjusting with respect to the housing plane (20) an orientation of the horizontal image plane (16) of the image of the scene, the horizon adjustment control forming part of the housing (22) but operationally independent of the mounting mechanism (120) to enable adjustment of the orientation of the horizontal image plane (16) when the camera housing (22) is securely mounted to the person, the vehicle, or the equipment; and
a control axis (24) that extends through the camera housing (22), and the horizon adjustment control including a rotary controller (14) that is operable for rotation about the control axis (24) to rotate the lens (26) and the image sensor (18) which are supported in rotational congruence with the rotary controller (14) and thereby change the orientation of the horizontal image plane (16) with respect to the housing plane (20) such that the image sensor (18) is operable to produce image data with respect to the orientation of the horizontal image plane (16).

2. The digital video camera (10) of claim 1, in which the lens (26) and the image sensor (18) are operable for rotation about the control axis (24).

3. The digital video camera (10) of any preceding claim, in which:
the scene has a level orientation;
the housing plane (20) includes the control axis (24);
the image sensor (18) and the lens (26) are mounted along an optical axis that is collinear with the control axis (24); and
the rotary controller (14) adjusts the horizontal image plane (16) with respect to the level orientation of the scene.

4. The digital video camera (10) of any preceding claim, wherein:
the scene has a level orientation;
the person, the vehicle, or the equipment has a mounting surface with an off-axis orientation with respect to the level orientation of the scene;
the mounting mechanism (120) provides positioning adjustment of the camera housing (22) with respect to the level orientation of the scene;
and cooperative adjustment of the mounting mechanism (120) and the rotary controller (14) facilitate adjustments of the horizontal image plane (16) for pitch, yaw, and roll with respect to the level orientation of the scene and permit orientation of the horizontal image plane (16) to be parallel to the level orientation of the scene despite the off-axis orientation of the mounting surface.

5. The digital video camera (10) of any preceding claim, in which the mounting mechanism (120) includes first and second mounting pieces configured for coupling to, respectively, the camera housing (22) and the person, the vehicle, or the equipment, and in which the first and second mounting pieces are rotationally coupled to assume an adjustable orientation relative to each other and thereby provide rotational positioning adjustment of the camera housing (22).

6. The digital video camera (10) of claim 5, in which:
the camera housing (22) has a length;
the first mounting piece comprises a plug mount (132) that has a circumferential edge (142) and is matable to the camera housing (22) to provide for linear positioning adjustment of the first mounting piece along the length of the camera housing (22); and
the second mounting piece comprises a base mount (130) that has a base mount cavity (146) into which the plug mount (132) fits, the base mount (130) cavity having an inside edge (144) to which the circumferential edge (142) of the plug mount (132) is matable, the matable fit of the base mount (130) and the plug mount (132) providing the rotational positioning adjustment of the camera housing (22) about a mount rotation axis that is transverse to the length of the camera housing (22) to enable setting of the digital video camera (10) to a desired viewing angle.

7. The digital video camera (10) of claim 5, in which the person, the vehicle, or the equipment includes a strap, and in which the second mounting piece includes a strap mount opening through which the strap can pass to facilitate the secure mounting of the camera housing (22) to the person, the vehicle, or the equipment.

8. The digital video camera (10) of any preceding claim, in which the image sensor (18) has an orientation with respect to the horizontal image plane (16), and the digital video camera (10) further comprises:
one or more laser sources (48) being capable of projecting a light emission indicative of a horizontal projection plane (52), the horizontal projection plane (52) being coordinated with the horizontal image plane (16) such that rotation of the rotary controller (14) changes orientation of the horizontal projection plane (52) and such that the image data is oriented with respect to the horizontal projection plane (52).

9. The digital video camera (10) of claim 8 in which one or more laser sources (48) include two laser sources (48) that establish a laser mounting axis that bisects the lens (26).

10. The digital video camera (10) of claim 9 in which the laser sources (48) are operable for rotation about the control axis (24).

11. The digital video camera (10) of any preceding claim in which the horizon adjustment control is a manual horizon adjustment control.

12. The digital video camera (10) of any preceding claim, further comprising:
a data storage medium for receiving image data directly or indirectly from the image sensor (18);
a video encoder that cooperates with the image sensor (18);
a microprocessor that provides instructions to the video encoder;
a microphone (90) for capturing audio data and directly or indirectly providing the audio data to the data storage medium or to a second data storage medium; and
a manually operable switch for controlling operation of the image sensor (18), and the video encoder, and/or the microphone (90).

13. The digital video camera (10) of claim 12, further comprising:
a switch activator (80) for the manually operable switch, wherein the switch activator (80) is movable over a slidably engageable surface of the camera housing (22).

14. The digital video camera (10) of claim 13, wherein:
the camera housing (22) has a top surface area; and
the slidably engageable surface forms a major portion of the top surface area.

15. The digital video camera (10) of claim 13 or 14, wherein:
the camera housing (22) has a top surface area;
the switch activator (80) covers a major portion of the top surface area.

16. The digital video camera (10) of any of claims 13 to 15, wherein:
the housing plane (20) transects the camera housing (22);
the camera housing (22) has a housing length along the housing plane (20); and
the switch activator (80) has an activator length that forms a major portion of the housing length.

17. The digital video camera (10) of any of claims 13 to 16, wherein:
the camera housing (22) presents a top plan view exhibiting a top surface area of the camera housing (22);
the camera housing (22) presents a front view exhibiting a contour of the top surface area; and
the switch activator (80) has a contour that matches the contour of the top surface area.

18. The digital video camera (10) of any one of claims 13 to 17, wherein:
the camera housing (22) has a housing surface contour;
the switch activator (80) is recessed beneath the housing surface contour; and
the switch activator (80) has a switch surface contour that matches the housing surface contour and is mounted such that the switch surface contour is flush with the housing surface contour.

19. The digital video camera (10) of any one of claims 12 to 18 wherein the switch is a magnetically controlled switch.

20. The digital video camera (10) of any one of claims 12 to 19 wherein the lens (26), image sensor (18), and data storage medium are enclosed within a camera housing (22) and the switch controls activation of the image data capturing operation without penetrating the camera housing (22).

21. A method for employing the digital video camera (10) of any of claims 5 to 20, comprising:
mounting the first mounting piece to the camera housing (22) of the digital video camera (10);
mounting the second mounting piece to a person, vehicle, or equipment;
coupling the first and second mounting pieces to assume an adjustable orientation relative to each other to provide rotational positioning adjustment of the camera housing (22) within the housing plane (20) and with respect to the person, the vehicle, or the equipment;
rotating a rotary controller (14) about the control axis (24) that extends through the camera housing (22), wherein the control axis (24) is coplanar with the housing plane (20), the rotary controller (14) supports an image sensor (18) in rotational congruence with rotation of the rotary controller (14), the image sensor (18) producing image data representing an image of a scene that is oriented with respect to the horizontal image plane (16), the rotary controller (14) and the image sensor (18) having an orientation that is adjustable with respect to the housing plane (20) such that rotation of the rotary controller (14) adjusts the orientation of the horizontal image plane (16) of the image of the scene with respect to the housing plane (20), and the rotary controller (14) is operationally independent of the first and second mounting pieces to enable adjustment of the orientation of the horizontal image plane (16) when the camera housing (22) is securely mounted to the person, the vehicle, or the equipment.

22. A method for employing the digital video camera (10) of any one of claims 8 to 20, comprising:
securely mounting the camera housing (22) to the person, the vehicle, or the equipment;
activating one or more of the laser sources (48), mounted in a rotary controller (14), to project a light emission indicative of the horizontal projection plane (52) that is parallel to the horizontal image plane (16) of the image sensor (18), the rotary controller (14) being operable to adjust with respect to the housing plane (20) an orientation of the horizontal image plane (16) of the image of the scene, the rotary controller (14) being operable for rotation about the control axis (24) that is perpendicular to the lens (26), such that rotation of the rotary controller (14) changes the orientation of the horizontal image plane (16) with respect to the housing (22) plane; and
rotating the rotary controller (14) about the control axis (24) in response to the horizontal projection plane (52) of the light emission, thereby changing the orientation of the horizontal image plane (16) of the image sensor (18) with respect to the housing plane (20).

23. The digital video camera (10) of claim 12, wherein:
the manually operable switch controls operation of the image sensor (18), the video encoder, and the microphone (90), the manually operable switch having an ON position and an OFF position such that when the switch is placed in the ON position, the image sensor (18), video encoder, and microphone (90) initiate the video and audio data capturing operations.

24. The digital video camera (10) of claim 13, wherein:
the switch activator (80) covers a major portion of the slidably engageable surface.

25. The digital video camera (10) of any one of claims 1 to 20 wherein the mounting mechanism (120) is operable for rotational adjustment between the camera housing (22) and the person, the vehicle, or the equipment.

26. The digital video camera (10) of any one of claims 1 to 20 wherein the mounting mechanism (120) is adapted for releasable mounting of the camera housing (22) to at least one of a helmet, snowboard deck, ski, fuel tank, window, door, vehicle hood, ski pole, roll-cage, windsurfing mast, hang glider support, goggle strap, or handle bar.

27. The digital video camera (10) of claim 26 wherein the mounting mechanism (120) is selected from a group of mounting mechanisms (120) having a common mounting feature (136, 138) for securing the camera housing (22) to the mounting mechanism (120) and having different base mount features (130) for securing the mounting mechanism (120) to different ones of the helmet, snowboard deck, ski, fuel tank, window, door, vehicle hood, ski pole, roll-cage, windsurfing mast, hang glider support, goggle strap, or handle bar.

## Patentansprüche

1. Integrierte, digitale Point-of-View-Videokamera, betreibbar zum Befestigen an einer Person, einem Fahrzeug oder einer Ausrüstung und betreibbar zur freihändigen Videoaufnahme während der Bewegung der Person, des Fahrzeugs oder der Ausrüstung, die/das an einer Sportaktivität beteiligt ist, umfassend:
ein Kameragehäuse (22), das ein Objektiv (26) und einen Bildsensor (18) enthält, wobei das Kameragehäuse (22) eine Gehäuseebene (20) definiert und der Bildsensor (18) betreibbar ist, um während der Bewegung der Person, des Fahrzeugs oder der Ausrüstung Licht einzufangen, das sich durch das Objektiv (26) ausbreitet, und eine Szene darzustellen, wobei der Bildsensor (18) Bilddaten erzeugt, die ein Bild der Szene repräsentieren, das in Bezug auf eine horizontale Bildebene (16) ausgerichtet ist, und das Objektiv (26) und der Bildsensor (18) eine in Bezug auf die Gehäuseebene (20) anpassbare Orientierung aufweisen;
einen Anbringungsmechanismus, der zur sicheren Anbringung des Kameragehäuses (22) an einer Kamerahalterung (126) anpassbar ist, wobei der Anbringungsmechanismus betreibbar ist, um es der an der Sportaktivität beteiligten Person zu ermöglichen, während der Teilnahme an der Sportaktivität ein freihändiges Point-of-View-Video zu erhalten, wobei der Anbringungsmechanismus (120) mehrere verschachtelte Gehäuseschienenhohlräume (122) und Gehäuseschienen (124) umfasst, die sich auf einer Seite des Kameragehäuses (22) befinden, wobei jeder/jede der mehreren verschachtelten Gehäuseschienenhohlräume (122) und Gehäuseschienen (124) konfiguriert ist, um mit entsprechenden Anbringungsschienen (136) und Anbringungsschienenhohlräumen (138) der Kamerahalterung (126) ineinanderzugreifen, wobei der Anbringungsmechanismus betreibbar ist, um die Seite des Kameragehäuses (22) mit der Kamerahalterung (126) gleitbar in Eingriff zu nehmen oder diese aus dem Eingriff zu bringen, und wobei mindestens eine Anbringungsschiene (136) oder ein Anbringungsschienenhohlraum (138) der mehreren Anbringungsschienen (136) und Anbringungsschienenhohlräumen (138) eine oder mehrere erste Sperren oder Höcker (140) beinhaltet und wobei mindestens ein Gehäuseschienenhohlraum (122) oder eine Gehäuseschiene (123) der mehreren verschachtelten Gehäuseschienenhohlräumen (122) und Gehäuseschienen (124) einen oder mehrere zweite Sperren oder Höcker (128) beinhaltet, wobei der eine oder die mehreren ersten Sperren oder Höcker (140) konfiguriert sind, um mit dem einen oder den mehreren zweiten Sperren beziehungsweise Höckern (128) derart ineinanderzugreifen, dass das gleitbare Eingreifen der mehreren verschachtelten Gehäuseschienenhohlräume (122) und Gehäuseschienen (124) des Kameragehäuses (22) mit den mehreren Halterungsschienen (136) und Halterungsschienenhohlräumen (138) der Kamerahalterung (126) die/den eine/einen oder die mehreren ersten Sperren oder Höcker (140) und die/den eine/einen oder die mehreren zweiten Sperren und Höcker (128) ineinandergreifen lässt, um eine unbeabsichtigte seitliche Bewegung der Kamerahalterung (126) in Bezug auf das Kameragehäuse (22) zu verhindern;
eine Horizontanpassungssteuerung zum Anpassen einer Ausrichtung der horizontalen Bildebene (16) des Bilds der Szene in Bezug auf die Gehäuseebene (20), wobei die Horizontanpassungssteuerung einen Teil des Gehäuses (22) bildet, aber betriebsmäßig unabhängig vom Anbringungsmechanismus (120) ist, um eine Anpassung der Ausrichtung der horizontalen Bildebene (16) zu ermöglichen, wenn das Kameragehäuse (22) sicher an der Person, dem Fahrzeug oder der Ausrüstung angebracht ist; und
eine Steuerachse (24), die sich durch das Kameragehäuse (22) erstreckt, und wobei die Horizontanpassungssteuerung einen Drehregler (14) umfasst, der für eine Drehung um die Steuerachse (24) betreibbar ist, um das Objektiv (26) und den Bildsensor (18), die mit dem Drehregler (14) in Drehungskongruenz gelagert sind, zu drehen und dadurch die Ausrichtung der horizontalen Bildebene (16) in Bezug auf die Gehäuseebene (20) derart zu verändern, dass der Bildsensor (18) betreibbar ist, um Bilddaten in Bezug auf die Ausrichtung der horizontalen Bildebene (16) zu erzeugen.

2. Digitale Videokamera (10) nach Anspruch 1, bei der das Objektiv (26) und der Bildsensor (18) zur Drehung um die Steuerachse (24) betreibbar sind.

3. Digitale Videokamera (10) nach einem der vorhergehenden Ansprüche, bei der:
die Szene eine ebene Ausrichtung ausweist;
die Gehäuseebene (20) die Steuerachse (24) beinhaltet;
der Bildsensor (18) und das Objektiv (26) entlang einer optischen Achse montiert sind, die mit der Steuerachse (24) kollinear ist; und
der Drehregler (14) die horizontale Bildebene (16) in Bezug auf die ebene Ausrichtung der Szene anpasst.

4. Digitale Videokamera (10) nach einem der vorhergehenden Ansprüche, wobei:
die Szene eine ebene Ausrichtung ausweist;
die Person, das Fahrzeug oder die Ausrüstung eine Anbringungsfläche mit einer Ausrichtung außerhalb der Achse in Bezug auf die ebene Ausrichtung der Szene aufweist;
der Anbringungsmechanismus (120) eine Positionierungseinstellung des Kameragehäuses (22) in Bezug auf die ebene Ausrichtung der Szene bereitstellt;
und die kooperative Anpassung des Anbringungsmechanismus (120) und des Drehreglers (14) die Anpassungen der horizontalen Bildebene (16) für Nicken, Gieren und Rollen in Bezug auf die ebene Ausrichtung der Szene erleichtern und die Ausrichtung der horizontalen Bildebene (16) parallel zur ebenen Ausrichtung der Szene trotz der Ausrichtung der Anbringungsfläche außerhalb der Achse erlauben.

5. Digitale Videokamera (10) nach einem der vorhergehenden Ansprüche, bei der der Anbringungsmechanismus (120) ein erstes und ein zweites Anbringungsteil beinhaltet, die jeweilig zum Koppeln mit dem Kameragehäuse (22) und der Person, dem Fahrzeug oder der Ausrüstung konfiguriert sind, und bei der das erste und das zweite Anbringungsteil drehend gekoppelt sind, um eine einstellbare Ausrichtung relativ zueinander einzunehmen und dadurch eine Drehpositionsanpassung des Kameragehäuses (22) bereitzustellen.

6. Digitale Videokamera (10) nach Anspruch 5, bei der:
das Kameragehäuse (22) eine Länge aufweist;
das erste Anbringungsteil eine Steckhalterung (132) umfasst, die eine Umfangskante (142) aufweist und mit dem Kameragehäuse (22) ineinandergreifbar ist, um eine lineare Positionsanpassung des ersten Anbringungsteils entlang der Länge des Kameragehäuses (22) bereitzustellen; und
das zweite Anbringungsteil eine Basishalterung (130) umfasst, die einen Basishalterungshohlraum (146) aufweist, in den die Steckhalterung (132) passt, wobei der Basishalterungshohlraum (130) eine Innenkante (144) aufweist, an der die Umfangskante (142) der Steckhalterung (132) ineinandergreifbar ist, wobei die Passung der Basishalterung (130) und der Steckhalterung (132) die Drehpositionsanpassung des Kameragehäuses (22) um eine quer zur Länge des Kameragehäuses (22) verlaufende Halterungsdrehachse bereitzustellen, um die Einstellung der digitalen Videokamera (10) auf einen gewünschten Betrachtungswinkel zu ermöglichen.

7. Digitale Videokamera (10) nach Anspruch 5, bei der die Person, das Fahrzeug oder die Ausrüstung einen Riemen beinhaltet und bei der das zweite Anbringungsteil eine Riemenhalterungsöffnung beinhaltet, durch die der Riemen hindurchgehen kann, um die sichere Anbringung des Kameragehäuses (22) an der Person, dem Fahrzeug oder der Ausrüstung zu ermöglichen.

8. Digitale Videokamera (10) nach einem der vorhergehenden Ansprüche, bei der der Bildsensor (18) eine Ausrichtung in Bezug auf die horizontale Bildebene (16) aufweist und die digitale Videokamera (10) ferner umfasst:
eine oder mehrere Laserquellen (48), die eine Lichtemission projizieren können, die eine horizontale Projektionsebene (52) anzeigt, wobei die horizontale Projektionsebene (52) mit der horizontalen Bildebene (16) derart koordiniert ist, dass eine Drehung des Drehreglers (14) die Orientierung der horizontalen Projektionsebene (52) ändert, und derart, dass die Bilddaten in Bezug auf die horizontale Projektionsebene (52) ausgerichtet sind.

9. Digitale Videokamera (10) nach Anspruch 8, bei der eine oder mehrere Laserquellen (48) zwei Laserquellen (48) beinhalten, die eine Laseranbringungsachse bilden, die das Objektiv (26) halbiert.

10. Digitale Videokamera (10) nach Anspruch 9, bei der die Laserquellen (48) zur Drehung um die Steuerachse (24) betreibbar sind.

11. Digitale Videokamera (10) nach einem der vorhergehenden Ansprüche, bei der die Horizontanpassungssteuerung eine manuelle Horizontanpassungssteuerung ist.

12. Digitale Videokamera (10) nach einem der vorhergehenden Ansprüche, ferner umfassend:
ein Datenspeichermedium zum direkten oder indirekten Empfangen von Bilddaten von dem Bildsensor (18);
einen Videocodierer, der mit dem Bildsensor (18) zusammenarbeitet;
einen Mikroprozessor, der dem Videocodierer Anweisungen bereitstellt;
ein Mikrofon (90) zum Aufnehmen von Audiodaten und zum direkten oder indirekten Bereitstellen der Audiodaten an das Datenspeichermedium oder an ein zweites Datenspeichermedium; und
einen manuell betätigbaren Schalter zum Steuern des Betriebs des Bildsensors (18) und des Videocodierers und/oder des Mikrofons (90).

13. Digitale Videokamera (10) nach Anspruch 12, ferner umfassend:
einen Schalterbetätiger (80) für den manuell betätigbaren Schalter, wobei der Schalterbetätiger (80) über eine gleitend in Eingriff bringbare Fläche des Kameragehäuses (22) bewegbar ist.

14. Digitale Videokamera (10) nach Anspruch 13, wobei:
das Kameragehäuse (22) einen oberen Oberflächenbereich aufweist; und
die gleitend in Eingriff bringbare Fläche einen Hauptteil des oberen Oberflächenbereichs bildet.

15. Digitale Videokamera (10) nach Anspruch 13 oder 14, wobei:
das Kameragehäuse (22) einen oberen Oberflächenbereich aufweist;
der Schalterbetätiger (80) einen Hauptteil des oberen Oberflächenbereichs bedeckt.

16. Digitale Videokamera (10) nach einem der Ansprüche 13 bis 15, wobei:
die Gehäuseebene (20) das Kameragehäuse (22) durchschneidet;
das Kameragehäuse (22) eine Gehäuselänge entlang der Gehäuseebene (20) aufweist; und
der Schalterbetätiger (80) eine Betätigerlänge aufweist, die einen Hauptteil der Gehäuselänge bildet.

17. Digitale Videokamera (10) nach einem der Ansprüche 13 bis 16, wobei:
das Kameragehäuse (22) eine Draufsicht darstellt, die einen oberen Oberflächenbereich des Kameragehäuses (22) zeigt;
das Kameragehäuse (22) eine Vorderansicht darstellt, die einen Umriss des oberen Oberflächenbereichs zeigt; und
der Schalterbetätiger (80) einen Umriss aufweist, der dem Umriss des oberen Oberflächenbereichs entspricht.

18. Digitale Videokamera (10) nach einem der Ansprüche 13 bis 17, wobei:
das Kameragehäuse (22) einen Gehäuseoberflächenumriss aufweist;
der Schalterbetätiger (80) unter dem Gehäuseoberflächenumriss ausgespart ist; und
der Schalterbetätiger (80) einen zum Gehäuseoberflächenumriss passenden Schalterflächenumriss aufweist und derart angebracht ist, dass der Schalterflächenumriss mit dem Gehäuseoberflächenumriss bündig abschließt.

19. Digitale Videokamera (10) nach einem der Ansprüche 12 bis 18, wobei der Schalter ein magnetisch gesteuerter Schalter ist.

20. Digitale Videokamera (10) nach einem der Ansprüche 12 bis 19, wobei das Objektiv (26), der Bildsensor (18) und das Datenspeichermedium in einem Kameragehäuse (22) eingeschlossen sind und der Schalter die Aktivierung des Bilddatenaufnahmevorgangs ohne Eindringen in das Kameragehäuse (22) steuert.

21. Verfahren zum Verwenden der digitalen Videokamera (10) nach einem der Ansprüche 5 bis 20, umfassend:
Anbringen des ersten Anbringungsteils an dem Kameragehäuse (22) der digitalen Videokamera (10);
Anbringen des zweiten Anbringungsteils an einer Person, einem Fahrzeug oder einer Ausrüstung;
Koppeln des ersten und des zweiten Anbringungsteils, um eine einstellbare Ausrichtung relativ zueinander einzunehmen, um eine Drehpositionsanpassung des Kameragehäuses (22) innerhalb der Gehäuseebene (20) und in Bezug auf die Person, das Fahrzeug oder die Ausrüstung bereitzustellen;
Drehen eines Drehreglers (14) um die Steuerachse (24), die sich durch das Kameragehäuse (22) erstreckt, wobei die Steuerachse (24) koplanar mit der Gehäuseebene (20) ist, der Drehregler (14) einen Bildsensor (18) in Drehungskongruenz mit der Drehung des Drehreglers (14) lagert, wobei der Bildsensor (18) Bilddaten erzeugt, die ein Bild einer Szene repräsentieren, die in Bezug auf die horizontale Bildebene (16) ausgerichtet ist, wobei der Drehregler (14) und der Bildsensor (18) eine in Bezug auf die Gehäuseebene (20) anpassbare Ausrichtung aufweisen, derart, dass eine Drehung des Drehreglers (14) die Ausrichtung der horizontalen Bildebene (16) des Bildes der Szene in Bezug auf die Gehäuseebene (20) anpasst, und der Drehregler (14) betriebsmäßig unabhängig von dem ersten und zweiten Anbringungsteil ist, um eine Anpassung der Ausrichtung der horizontalen Bildebene (16) zu ermöglichen, wenn das Kameragehäuse (22) sicher an der Person, dem Fahrzeug oder der Ausrüstung angebracht ist.

22. Verfahren zum Verwenden der digitalen Videokamera (10) nach einem der Ansprüche 8 bis 20, umfassend:
sicheres Anbringen des Kameragehäuses (22) an der Person, dem Fahrzeug oder der Ausrüstung;
Aktivieren einer oder mehrerer der Laserquellen (48), die in einem Drehregler (14) angebracht sind, um eine Lichtemission zu projizieren, die die horizontale Projektionsebene (52) anzeigt, die parallel zur horizontalen Bildebene (16) des Bildsensors (18) ist, wobei der Drehregler (14) betreibbar ist, um in Bezug auf die Gehäuseebene (20) eine Ausrichtung der horizontalen Bildebene (16) des Bildes der Szene einzustellen, wobei der Drehregler (14) zum Drehen um die Steuerachse (24), die senkrecht zum Objektiv (26) ist, derart betreibbar ist, dass eine Drehung des Drehreglers (14) die Ausrichtung der horizontalen Bildebene (16) in Bezug auf die Gehäuseebene (22) ändert; und
Drehen des Drehreglers (14) um die Steuerachse (24) als Reaktion auf die horizontale Projektionsebene (52) der Lichtemission, wobei dadurch die Ausrichtung der horizontalen Bildebene (16) des Bildsensors (18) in Bezug auf die Gehäuseebene (20) geändert wird.

23. Digitale Videokamera (10) nach Anspruch 12, wobei:
der manuell betätigbare Schalter den Betrieb des Bildsensors (18), des Videocodierers und des Mikrofons (90) steuert, wobei der manuell betätigbare Schalter eine EIN-Position und eine AUS-Position aufweist, derart, dass, wenn der Schalter in die EIN-Position gebracht wird, der Bildsensor (18), der Videocodierer und das Mikrofon (90) die Video- und Audiodatenerfassungsvorgänge einleiten.

24. Digitale Videokamera (10) nach Anspruch 13, wobei:
der Schalterbetätiger (80) einen Hauptteil der gleitend in Eingriff bringbaren Oberfläche bedeckt.

25. Digitale Videokamera (10) nach einem der Ansprüche 1 bis 20, wobei der Anbringungsmechanismus (120) zur Drehanpassung zwischen dem Kameragehäuse (22) und der Person, dem Fahrzeug oder der Ausrüstung betreibbar ist.

26. Digitale Videokamera (10) nach einem der Ansprüche 1 bis 20, wobei der Anbringungsmechanismus (120) zur lösbaren Anbringung des Kameragehäuses (22) an einem Helm, einem Snowboard, einem Ski, einem Kraftstofftank, einem Fenster, einer Tür, einer Motorhaube, einem Skistock, einem Überrollkäfig, einem Windsurfmast, einer Hängegleiterhalterung, einem Brillenband und/oder einem Lenker angepasst ist.

27. Digitale Videokamera (10) nach Anspruch 26, wobei der Anbringungsmechanismus (120) aus einer Gruppe von Anbringungsmechanismen (120) mit einem gemeinsamen Anbringungsmerkmal (136, 138) zum Befestigen des Kameragehäuses (22) an dem Anbringungsmechanismus (120) ausgewählt ist und unterschiedliche Grundhalterungsmerkmale (130) zum Befestigen des Anbringungsmechanismus (120) an verschiedenen von einem Helm, einem Snowboard, einem Ski, einem Kraftstofftank, einem Fenster, einer Tür, einer Motorhaube, einem Skistock, einem Überrollkäfig, einem Windsurfmast, einer Hängegleiterhalterung, einem Brillenband und/oder einem Lenker aufweist.

## Revendications

1. Caméra vidéo numérique à point de vue intégré pouvant être montée sur une personne, un véhicule ou un équipement et pouvant fonctionner pour une capture vidéo mains libres pendant le mouvement de la personne, du véhicule ou de l'équipement impliqué dans une activité de sports d'action, comprenant :
un boîtier de caméra (22) contenant une lentille (26) et un capteur d'image (18), le boîtier de caméra (22) définissant un plan de boîtier (20) et le capteur d'image (18) pouvant fonctionner pour capturer la lumière se propageant à travers la lentille (26) et représentant une scène pendant le mouvement de la personne, du véhicule ou de l'équipement, le capteur d'image (18) produisant des données d'image représentant une image de la scène qui est orientée par rapport à un plan d'image horizontal (16), et la lentille (26) et le capteur d'image (18) ayant une orientation qui est réglable par rapport au plan de boîtier (20) ;
un mécanisme de montage adaptable pour un montage solide du boîtier de caméra (22) sur une monture de caméra (126), moyennant quoi le mécanisme de montage peut fonctionner pour permettre à la personne impliquée dans l'activité de sport d'action d'obtenir une vidéo de point de vue mains libres pendant sa participation à l'activité de sport d'action, le mécanisme de montage (120) comprenant une pluralité de cavités de rail de boîtier entrelacées (122) et des rails de boîtier (124) situés sur un côté du boîtier de caméra (22), chacune de la pluralité de cavités de rail de boîtier entrelacées (122) et des rails de boîtier (124) étant conçus pour s'assembler avec des rails de montage correspondants (136) et des cavités de rail de montage (138) de la monture de caméra (126), le mécanisme de montage pouvant fonctionner pour mettre en prise et désolidariser de manière coulissante le côté du boîtier de caméra (22) avec la monture de caméra (126), et dans lequel au moins un rail de monture (136) ou une cavité de rail de monture (138) de la pluralité de rails de monture (136) et des cavités de rail de monture (138) comportent un ou plusieurs premiers crans ou bosses (140), et dans lequel au moins une cavité de rail de boîtier (122) ou un rail de boîtier (123) de la pluralité de cavités de rail de boîtier entrelacées (122) et des rails de boîtier (124) comportent une ou plusieurs secondes bosses ou détentes (128), la ou les premières détentes ou bosses (140) étant conçues pour s'assembler avec la ou les secondes bosses ou détentes (128) respectivement de telle sorte qu'elles mettent en prise de manière coulissante la pluralité de cavités de rail de boîtier entrelacées (122) et les rails de boîtier (124) du boîtier de caméra (22) avec la pluralité de rails de montures (136) et les cavités de rail de monture (138) de la monture de caméra (126) assemble le ou les premières détentes ou bosses (140) et le ou les secondes détentes ou bosses (128) pour empêcher un mouvement latéral involontaire de la monture de caméra (126) par rapport au boîtier de caméra (22) ;
une commande de réglage d'horizon permettant de régler par rapport au plan de boîtier (20) une orientation du plan d'image horizontal (16) de l'image de la scène, la commande de réglage d'horizon faisant partie du boîtier (22) mais fonctionnellement indépendante du mécanisme de montage (120) pour permettre le réglage de l'orientation du plan d'image horizontal (16) lorsque le boîtier de caméra (22) est solidement monté sur la personne, le véhicule ou l'équipement ; et
un axe de commande (24) qui s'étend à travers le boîtier de caméra (22), et la commande de réglage d'horizon comportant un dispositif de commande rotatif (14) qui peut fonctionner en rotation autour de l'axe de commande (24) afin de faire tourner la lentille (26) et le capteur d'image (18) qui sont maintenus en congruence rotationnelle avec le dispositif de commande rotatif (14) et modifient ainsi l'orientation du plan d'image horizontal (16) par rapport au plan de boîtier (20) de telle sorte que le capteur d'image (18) peut fonctionner pour produire des données d'image par rapport à l'orientation du plan d'image horizontal (16).

2. Caméra vidéo numérique (10) selon la revendication 1, dans laquelle la lentille (26) et le capteur d'image (18) peuvent fonctionner en rotation autour de l'axe de commande (24).

3. Caméra vidéo numérique (10) selon l'une quelconque des revendications précédentes, dans laquelle :
la scène a une orientation de niveau ;
le plan de boîtier (20) comporte l'axe de commande (24) ;
le capteur d'image (18) et la lentille (26) sont montés le long d'un axe optique colinéaire avec l'axe de commande (24) ; et
le dispositif de commande rotatif (14) règle le plan d'image horizontal (16) par rapport à l'orientation de niveau de la scène.

4. Caméra vidéo numérique (10) selon l'une quelconque des revendications précédentes, dans laquelle :
la scène a une orientation de niveau ;
la personne, le véhicule ou l'équipement a une surface de montage avec une orientation hors axe par rapport à l'orientation de niveau de la scène ;
le mécanisme de montage (120) fournit un réglage de positionnement du boîtier de caméra (22) par rapport à l'orientation de niveau de la scène ;
et le réglage coopératif du mécanisme de montage (120) et le dispositif de commande rotatif (14) facilitent les réglages du plan d'image horizontal (16) pour le tangage, le lacet et le roulis par rapport à l'orientation de niveau de la scène et permettent l'orientation du plan d'image horizontale (16) pour être parallèle à l'orientation de niveau de la scène malgré l'orientation hors axe de la surface de montage.

5. Caméra vidéo numérique (10) selon l'une quelconque des revendications précédentes, dans laquelle le mécanisme de montage (120) comporte des première et seconde pièces de montage conçues pour s'accoupler respectivement au boîtier de caméra (22) et à la personne, au véhicule ou à l'équipement, et dans laquelle les première et seconde pièces de montage sont accouplées en rotation pour adopter une orientation réglable l'une par rapport à l'autre et fournir ainsi un réglage de positionnement en rotation du boîtier de caméra (22).

6. Caméra vidéo numérique (10) selon la revendication 5, dans laquelle :
le boîtier de caméra (22) a une longueur ;
la première pièce de montage comprend une monture de fiche (132) qui a un bord circonférentiel (142) et peut s'assembler au boîtier de caméra (22) pour fournir un réglage de positionnement linéaire de la première pièce de montage le long de la longueur du boîtier de caméra (22) ; et
la seconde pièce de montage comprend une monture de base (130) qui a une cavité de monture de base (146) dans laquelle la monture de fiche (132) s'emboîte, la cavité de monture de base (130) ayant un bord intérieur (144) auquel le bord circonférentiel (142) de la monture de fiche (132) peut s'assembler, l'ajustement par assemblage de la monture de base (130) et de la monture de fiche (132) fournissant le réglage de positionnement en rotation du boîtier de caméra (22) autour d'un axe de rotation de monture qui est transversal à la longueur du boîtier de caméra (22) pour permettre le réglage de la caméra vidéo numérique (10) à un angle de vue souhaité.

7. Caméra vidéo numérique (10) selon la revendication 5, dans laquelle la personne, le véhicule ou l'équipement comporte une sangle, et dans laquelle la seconde pièce de montage comporte une ouverture de monture de sangle à travers laquelle la sangle peut passer pour faciliter le montage solide du boîtier de caméra (22) à la personne, au véhicule ou à l'équipement.

8. Caméra vidéo numérique (10) selon l'une quelconque des revendications précédentes, dans laquelle le capteur d'image (18) a une orientation par rapport au plan d'image horizontal (16), et la caméra vidéo numérique (10) comprend en outre :
une ou plusieurs sources laser (48) étant capables de projeter une émission de lumière indiquant un plan de projection horizontal (52), le plan de projection horizontal (52) étant coordonné avec le plan d'image horizontal (16) de telle sorte que la rotation du dispositif de commande rotatif (14) modifie l'orientation du plan de projection horizontal (52) et de telle sorte que les données d'image sont orientées par rapport au plan de projection horizontal (52).

9. Caméra vidéo numérique (10) selon la revendication 8, dans laquelle une ou plusieurs sources laser (48) comportent deux sources laser (48) qui établissent un axe de montage laser qui divise la lentille en deux (26).

10. Caméra vidéo numérique (10) selon la revendication 9, dans laquelle les sources laser (48) peuvent fonctionner en rotation autour de l'axe de commande (24).

11. Caméra vidéo numérique (10) selon l'une quelconque des revendications précédentes, dans laquelle la commande de réglage d'horizon est une commande de réglage d'horizon manuelle.

12. Caméra vidéo numérique (10) selon l'une quelconque des revendications précédentes, comprenant en outre :
un support de stockage de données permettant de recevoir des données d'image directement ou indirectement depuis le capteur d'image (18) ;
un codeur vidéo qui coopère avec le capteur d'image (18) ;
un microprocesseur qui fournit des instructions au codeur vidéo ;
un microphone (90) permettant de capturer des données audio et fournir directement ou indirectement les données audio au support de stockage de données ou à un second support de stockage de données ; et
un commutateur pouvant fonctionner manuellement pour commander le fonctionnement du capteur d'image (18), et du codeur vidéo, et/ou du microphone (90).

13. Caméra vidéo numérique (10) selon la revendication 12, comprenant en outre :
un activateur de commutateur (80) pour le commutateur pouvant fonctionner manuellement, dans lequel l'activateur de commutateur (80) est mobile sur une surface en prise de manière coulissante du boîtier de caméra (22).

14. Caméra vidéo numérique (10) selon la revendication 13, dans laquelle :
le boîtier de caméra (22) a une surface supérieure ; et
la surface en prise de manière coulissante forme une partie majeure de la surface supérieure.

15. Caméra vidéo numérique (10) selon la revendication 13 ou 14, dans laquelle :
le boîtier de caméra (22) a une surface supérieure ;
l'activateur de commutateur (80) couvre une majeure partie de la surface supérieure.

16. Caméra vidéo numérique (10) selon l'une quelconque des revendications 13 à 15, dans laquelle :
le plan de boîtier (20) coupe le boîtier de caméra (22) ;
le boîtier de caméra (22) a une longueur de boîtier le long du plan de boîtier (20) ; et
l'activateur de commutateur (80) a une longueur d'activateur qui forme une partie majeure de la longueur du boîtier.

17. Caméra vidéo numérique (10) selon l'une quelconque des revendications 13 à 16, dans laquelle :
le boîtier de caméra (22) présente une vue de plan supérieure exposant une surface supérieure du boîtier de caméra (22) ;
le boîtier de caméra (22) présente une vue de face exposant un contour de la surface supérieure ; et
l'activateur de commutateur (80) a un contour qui correspond au contour de la surface supérieure.

18. Caméra vidéo numérique (10) selon l'une quelconque des revendications 13 à 17, dans laquelle :
le boîtier de caméra (22) a un contour de surface de boîtier ;
l'activateur de commutateur (80) est encastré sous le contour de la surface de boîtier ; et
l'activateur de commutateur (80) a un contour de surface de commutateur qui correspond au contour de surface de boîtier et est monté de telle sorte que le contour de surface de commutateur affleure le contour de surface de boîtier.

19. Caméra vidéo numérique (10) selon l'une quelconque des revendications 12 à 18, dans laquelle le commutateur est un commutateur commandé magnétiquement.

20. Caméra vidéo numérique (10) selon l'une quelconque des revendications 12 à 19, dans laquelle la lentille (26), le capteur d'image (18) et le support de stockage de données sont enfermés dans un boîtier de caméra (22) et le commutateur commande l'activation de l'opération de capture de données d'image sans pénétrer dans le boîtier de caméra (22).

21. Procédé d'utilisation de la caméra vidéo numérique (10) selon l'une quelconque des revendications 5 à 20, comprenant :
le montage de la première pièce de montage sur le boîtier de caméra (22) de la caméra vidéo numérique (10) ;
le montage de la seconde pièce de montage sur une personne, un véhicule ou un équipement ;
l'accouplement des première et seconde pièces de montage pour adopter une orientation réglable l'une par rapport à l'autre afin de fournir un réglage de positionnement en rotation du boîtier de caméra (22) dans le plan de boîtier (20) et par rapport à la personne, au véhicule ou à l'équipement ;
la rotation d'un dispositif de commande rotatif (14) autour de l'axe de commande (24) qui s'étend à travers le boîtier de caméra (22), dans lequel l'axe de commande (24) est coplanaire avec le plan de boîtier (20), le dispositif de commande rotatif (14) assure la maintenance d'un capteur d'image (18) en congruence rotationnelle avec la rotation du dispositif de commande rotatif (14), le capteur d'image (18) produisant des données d'image représentant une image d'une scène qui est orientée par rapport au plan d'image horizontal (16), le dispositif de commande rotatif (14) et le capteur d'image (18) ayant une orientation qui est réglable par rapport au plan de boîtier (20) de telle sorte que la rotation du dispositif de commande rotatif (14) règle l'orientation du plan d'image horizontal (16) de l'image de la scène par rapport au plan de boîtier (20), et le dispositif de commande rotatif (14) est fonctionnellement indépendant des première et seconde pièces de montage pour permettre le réglage de l'orientation du plan d'image horizontal (16) lorsque le boîtier de caméra (22) est solidement fixé à la personne, au véhicule, ou à l'équipement.

22. Procédé d'utilisation de la caméra vidéo numérique (10) selon l'une quelconque des revendications 8 à 20, comprenant :
le montage solide du boîtier de caméra (22) sur la personne, le véhicule ou l'équipement ;
l'activation d'une ou plusieurs des sources laser (48), montées dans un dispositif de commande rotatif (14), pour projeter une émission de lumière indiquant le plan de projection horizontal (52) qui est parallèle au plan d'image horizontal (16) du capteur d'image (18), le dispositif de commande rotatif (14) pouvant fonctionner pour régler par rapport au plan de boîtier (20) une orientation du plan image horizontal (16) de l'image de la scène, le dispositif de commande rotatif (14) pouvant être actionné pour une rotation autour de l'axe de commande (24) qui est perpendiculaire à la lentille (26), de telle sorte que la rotation du dispositif de commande rotatif (14) modifie l'orientation du plan d'image horizontal (16) par rapport au plan de boîtier (22) ; et
la rotation du dispositif de commande rotatif (14) autour de l'axe de commande (24) en réponse au plan de projection horizontal (52) de l'émission de lumière, modifiant ainsi l'orientation du plan d'image horizontal (16) du capteur d'image (18) par rapport au plan de boîtier (20).

23. Caméra vidéo numérique (10) selon la revendication 12, dans laquelle :
le commutateur pouvant fonctionner manuellement commande le fonctionnement du capteur d'image (18), du codeur vidéo et du microphone (90), le commutateur pouvant fonctionner manuellement ayant une position MARCHE et une position ARRÊT de telle sorte que lorsque le commutateur est placé dans la position MARCHE, le capteur d'image (18), le codeur vidéo et le microphone (90) initient les opérations de capture de données vidéo et audio.

24. Caméra vidéo numérique (10) selon la revendication 13, dans laquelle :
l'activateur de commutateur (80) couvre une majeure partie de la surface en prise de manière coulissante.

25. Caméra vidéo numérique (10) selon l'une quelconque des revendications 1 à 20, dans laquelle le mécanisme de montage (120) peut fonctionner pour un réglage en rotation entre le boîtier de caméra (22) et la personne, le véhicule ou l'équipement.

26. Caméra vidéo numérique (10) selon l'une quelconque des revendications 1 à 20, dans laquelle le mécanisme de montage (120) est adapté pour un montage amovible du boîtier de caméra (22) sur un casque, et/ou une planche de surf des neiges, et/ou un ski, et/ou un réservoir de carburant, et/ou une fenêtre, et/ou une porte, et/ou un capot de véhicule, et/ou un bâton de ski, et/ou une cage de retournement, et/ou un mât de planche à voile, et/ou un support de deltaplane, et/ou une sangle de lunettes et/ou un guidon.

27. Caméra vidéo numérique (10) selon la revendication 26, dans laquelle le mécanisme de montage (120) est sélectionné parmi un groupe de mécanismes de montage (120) ayant une caractéristique de montage commune (136, 138) permettant de fixer le boîtier de caméra (22) au mécanisme de montage (120) et ayant différentes caractéristiques de monture de base (130) permettant de fixer le mécanisme de montage (120) à différents éléments parmi le casque, la planche de surf des neiges, le ski, le réservoir de carburant, la fenêtre, la porte, le capot du véhicule, le bâton de ski, la cage de retournement, le mât de planche à voile, le support de deltaplane, la sangle de lunettes ou le guidon.
